(19) Europäisches Patentamt / European Patent Office / Office européen des brevets

(11) **EP 3 509 418 B1**

(12) # EUROPEAN PATENT SPECIFICATION

(45) Date of publication and mention
of the grant of the patent:
**15.11.2023 Bulletin 2023/46**

(21) Application number: **17734649.1**

(22) Date of filing: **13.06.2017**

(51) International Patent Classification (IPC):
*A01N 25/00* (2006.01)        *A01N 25/08* (2006.01)
*A01N 25/10* (2006.01)        *A01N 31/06* (2006.01)
*A01N 43/54* (2006.01)        *A01N 47/40* (2006.01)
*A01P 3/00* (2006.01)         *A01P 5/00* (2006.01)
*A01P 7/00* (2006.01)

(52) Cooperative Patent Classification (CPC):
(C-Sets available)
**A01N 25/08; A01N 25/00; A01N 25/10;**
**A01N 31/06; A01N 43/54; A01N 47/40**        (Cont.)

(86) International application number:
**PCT/EP2017/064457**

(87) International publication number:
**WO 2017/216193 (21.12.2017 Gazette 2017/51)**

(54) **SEED COATINGS COMPRISING PESTICIDE**

SAATGUTBESCHICHTUNGEN MIT PESTIZID

ENROBAGES DE SEMENCES COMPRENANT UN PESTICIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.06.2016 GB 201610354**

(43) Date of publication of application:
**17.07.2019 Bulletin 2019/29**

(73) Proprietor: **Terramera Exco Holdings Ltd
Vancouver, BC V5Y 1K3 (CA)**

(72) Inventors:
• **DILLON, Aoife Bridget
Winchester
Hampshire SO21 1TH (GB)**
• **CURCIC, Igor
Winchester
Hampshire SO21 1TH (GB)**
• **KNIGHT, Craig Martin
Winchester
Hampshire SO21 1TH (GB)**
• **NAYLOR, Rosie Elizabeth
Winchester
Hampshire SO21 1TH (GB)**

(74) Representative: **Boynton, Juliette Alice
Schlich
9 St. Catherine's Road
Littlehampton, West Sussex BN17 5HS (GB)**

(56) References cited:
**US-A1- 2014 057 786     US-A1- 2015 150 250**

(52) Cooperative Patent Classification (CPC): (Cont.)

C-Sets
**A01N 25/08, A01N 43/54;**
**A01N 25/08, A01N 47/10;**
**A01N 25/10, A01N 43/54;**
**A01N 25/10, A01N 47/40**

**Description**

The present invention relates to seeds coated with pesticides, methods of coating seeds with pesticides, uses of particles comprising pesticides in coating seeds, and methods of treating seeds with pesticides. In particular, the invention relates to electrostatic particles bearing systemic pesticides and their manufacture, seeds comprising such particles, methods of coating seeds with electrostatic particles carrying systemic pesticides wherein the pesticides are placed in contact with the seed coat, uses of electrostatic particles comprising such systemic pesticides and method of treating seeds with systemic pesticides by application of electrostatic particles.

Pest infestation of plants for use by man, be the use for producing seed for harvesting and planting, for consumption or in the manufacture of staple goods for eating and/or manufacture of plant-derived goods, is the cause of major economic losses worldwide.

Many means of treating pest infestation through the application of pesticides are practised worldwide. It is a constant battle to keep one step ahead of pest evolution and/or to maintain or improve pest controlling activities where the use of chemicals over time indicates that pest species are developing resistance.

A problem associated with the conventional use of chemical pesticides provided in liquid form against pests in the field is that while the pesticides provided may be effective for short periods of time after application, over longer periods of time the level of activity tends to drop off. As a result, the user has to apply pesticides more frequently in order to maintain control over pest infestation. This in turn means that the environs to which the pesticides are applied will receive high chemical loads often and this may have an adverse effect on the environment, and in particular on animals such as mammals, including humans, as well as other kinds such as birds, amphibians, and beneficial arthropods such as bees, aphid-eating ladybirds, spiders and butterflies. A further issue with the application of such chemical agents to plant surfaces in liquid form is that the application of such agents typically relies on the target pest (for example, an arthropod), attacking aerial parts, typically foliar parts, and/or other parts, such as seeds and roots, and coming into contact with the chemical agent as applied and located on the outside surface of the leaf, stem, root or seed. The application of liquid forms of pesticide tends to be patchy at best, and so target organisms may evade the applied pesticide. When conventional pesticides are applied to plant parts, in the form of sprays, mists, washes, baths and the like, losses to the environment tend to be high because active agents may also be washed off through the action of rain or of irrigation equipment, and a high proportion of the active chemical is lost to the environment. Such environmental action tends to limit the effectiveness of pesticides applied in liquid form and may in itself lead to chemical loads on the environment which may be further destructive to domesticated and wild animals, amphibians, wild birds and the like.

GB 2481881 relates to a liquid composition comprising electret particles carrying non-systemic pesticides that are sprayed onto crop plants using conventional spraying equipment. There is no mention of making particles comprising systemic pesticides or of using novel formulation methods to acquire electrostatic particles in seed coat formulations not requiring the employment of surfactants. 1% by weight of the non-systemic pesticide was incorporated into molten wax. This was solidified and formed into particles.

US 2015/150250, in the name of Jessop, describes the use of particles in controlling a population of arthropods pests, the particles comprising electrostatic particles made from wax and a pesticide present at a weight of no more than 2% by weight of the particles. The particles can be applied to crops or produce thereof, but are transferred to the cuticles of arthropods on contact with such arthropods, resulting in control of the arthropod population.

US 2014/057786, also in the name of Jessop, describes a coating for cotton seeds formed from electrostatic wax particles into which a pesticide is mixed at a rate of 1% be weight. The particles are applied to seeds before sewing, whence they are transferred by electrostatic forces to the cuticle of an arthropod, resulting in control of the arthropod.

It is not known to incorporate pesticides into wax particles at a quantity of >2% by weight. Pesticides are in general not readily miscible with waxes, and it has not previously been possible to form wax particles containing a quantity of a pesticide >2%.

Dry powder formulations of compounds having activity against pests are rarely applied to growing crops (as opposed to seed coatings of the present invention) because of difficulties in achieving an even application to the crop, environmental contamination, and worker safety.

There exists a need to overcome or at least reduce one or more drawbacks of conventional methods of treating pest infestations in the field. This and other advantages will become apparent from the following description and examples.

According to the invention there is provided a method of treating a seed with a systemic pesticide comprising contacting the seed with electrostatic carrier particles of median diameter up to $120\mu$m and comprising at least one of natural waxes, synthetic waxes and mineral waxes having a melting point of $\geq40°C$ and incorporating the systemic pesticide such that the pesticide is within and on the surface of the carrier particle wherein the weight of electrostatic carrier particles containing systemic pesticide per seed is from 0.0001 mg to 4mg, and wherein the particles contain $\geq10\%$ pesticide by weight

whereby the systemic pesticide is taken up by the seed.

Additionally, the invention provides use of electrostatic carrier particles of median diameter up to $120\mu$m com-

prising

at least one of natural waxes, synthetic waxes and mineral waxes having a melting point of ≥40°C, and
at least one systemic pesticide

in coating seeds,
wherein the said pesticide is combined within and on the surface of the electrostatic carrier particles,
wherein the weight of electrostatic particles including systemic pesticide per seed is from 0.0001mg to 4mg, and
wherein the particles contain ≥10% pesticide by weight,
whereby the systemic pesticide is taken up by the seed.

According to a further aspect of the present invention there is provided a seed-containing composition comprising i) at least one systemic pesticide in contact with the seed; and ii) electrostatic carrier particles of median diameter up to 120μm and made from at least one of natural waxes, synthetic waxes and mineral waxes having a melting point of ≥40°C, wherein the said pesticide is combined within and on the surface of the electrostatic carrier particles, characterised in that the weight of electrostatic particles containing systemic pesticide per seed is from 0.0001 mg to 4mg, and wherein the particles contain ≥10% pesticide by weight for use in transferring the systemic pesticide into the seed.

The ability to add electrostatic particles comprising systemic pesticides that are active against pests to seeds maximizes application to the seed and provide seeds with an in-built chemical defence or resistance (aka a systemic defence or resistance) against pests and obviates problems associated with the conventional application of pesticides as alluded to above. An additional advantage of using electrostatic particles in combination with systemic pesticides is that fewer unintentional side effects are realised in the environment. Thus, in the case of systemic insecticides, such as neonicotinoids, the exposure to bees and other beneficial arthropods is substantially reduced, when compared to liquid application, as is the possibility of toxicity within the environment. Similarly, in the case of systemic fungal pesticides, the risk of harmful effects on beneficial fungi within the environment is substantially reduced.

It has thus now been found that electrostatic particles comprising systemic pesticides can be provided to seeds. Such electrostatic particles are capable of adhering to the surfaces of seeds, and releasing systemic pesticides that are taken up by the seeds in sufficient quantities that kill or disable arthropod pests which attack, that is to say, eat the seeds and/or plants that germinate from the seeds, or fungal species which grow on the seeds and/or plants that germinate from treated seeds of the invention. Seeds treated with electrostatic particles comprising systemic pesticides of the invention show little or no loss of viability. The systemic pesticide is present in the seeds in quantities that are very much lower than the quantities of residues found on the surfaces of seeds and/or other parts of crop plants of conventionally applied pesticides, including conventionally applied systemic pesticides, of the prior art.

By bringing pesticides into contact with the seed wall by making use of the electrostatic properties of particles of the invention, small quantities of systemic pesticide can be transferred into the seed. The quantity of pesticide transferred into the seed is retained therein and as a consequence arthropod pests which attack the seed ingest a quantity of pesticide through eating the seed, or in the case of fungi, through the germination of fungal spores and subsequent penetration of the seed coat which then affects their viability either by killing them or causes them to suffer a decrease in numbers or reduced growth due to poisoning that may ultimately lead to death, and/or inability to reproduce or reduction in the ability to reproduce.

The systemic pesticide may be selected from arthropod-killing agents such as insecticides, acaricides and fungicidal agents that are able to translocate into the seed from the electrostatic particles of the invention located on or close to the seed coat. Once the pesticide is translocated into the seed it is present within the seed in a quantity sufficient to effect its action against pests which attack the seed and/or roots and shoots that emerge from the seed, and concomitantly does not substantially affect seed viability. The kinds of pesticide that may be used systemically in the present invention include those pesticides that are able to translocate from the electrostatic particles of the invention into the seed and include representative systemic pesticides selected from the systemic organophosphates such as Acephate (IUPAC name O,S-Dimethyl Acetylphosphoramidothioate), Disulfoton (IUPAC name O,O-diethyl S-2-ethylthioethyl phosphorodithioate), Fenamiphos (IUPAC name (RS)-(ethyl 4-methylthio-m-tolyl isopropyl-phosphoramidate), Fosthiazate (IUPAC name (RS)-[S-(RS)-sec-butyl O-ethyl 2-oxo-1,3-thiazolidin-3-ylphosphonothioate], Methamidophos (IUPAC name (RS)-(O,S-dimethyl phosphoramidothioate)), Mevinphos (IUPAC name methyl (EZ)-3-(dimethoxyphosphinoyloxy)but-2-enoate), Omethoate (IUPAC name 2-dimethoxyphosphinoylthio-N-methylacetamide), Oxydemeton-methyl (IUPAC name S-2-ethylsulfinylethyl O,O-dimethyl phosphorothioate), Phorate (IUPAC name O,O-diethyl S-ethylthiomethyl phosphorodithioate), Terbufos (IUPAC name S-tert-butylthiomethyl O,O-diethyl phosphorodithioate) and Monocrotophos (IUPAC name dimethyl (E)-1-methyl-2-(methylcarbamoyl)vinyl phosphate); the systemic **carbamates** such as Aldicarb (IUPAC name (EZ)-2-methyl-2-(methylthio)propionaldehyde O-methylcarbamoyloxime), Bendiocarb (IUPAC name 2,2-dimethyl-1,3-benzodioxol-4-yl methylcarbamate), Carbofuran (IUPAC name 2,3-dihydro-2,2-dimethylbenzofuran-7-yl methylcarbamate), Dioxacarb (IUPAC name 2-(1,3-dioxolan-2-yl)phenyl methylcarbamate), and Methomyl (IUPAC name *S*-methyl (*EZ*)-*N*-(methylcarbamoyloxy)thioacetimidate); the systemic **neonicotinoids** such as Acetamiprid (IUPAC name (*E*)-*N*1-[(6-chloro-3-pyridyl)methyl]-*N*2-cyano-*N*1-methylacetamidine), Clothianidin (IUPAC name (*E*)-1-(2-chloro-1,3-thiazol-5-ylmethyl)-3-methyl-2-nitroguanidine), Imidacloprid (IUPAC name (*E*)-1-(6-chloro-3-pyridylmethyl)-*N*-nitroimidazolidin-2-ylideneamine), Thiacloprid (IUPAC name (Z)-3-(6-chloro-3-pyridylmethyl)-1,3-thiazolidin-2-ylidenecyanamide), and Thiamethoxam (IUPAC name (*EZ*)-3-(2-chloro-1,3-thiazol-5-ylmethyl)-5-methyl-1,3,5-oxadiazinan-4-ylidene(nitro)amine); the systemic **ryanoids** such as Chlorantraniliprole (IUPAC name 3-bromo-4'-chloro-1-(3-chloro-2-pyridyl)-2'-methyl-6'-(methylcarbamoyl)pyrazole-5-carboxanilide); and the systemic **plant-derived insecticides** such as Azadirachtin (IUPAC name Dimethyl (2aR,3S,4S,R,S,7aS,8S,10R,10aS,10bR)-10-(acetyloxy)-3,5-dihydroxy-4-[(1S,2S,6S,8S,9R,11S)-2-hydroxy-11-methyl-5,7,10-trioxatetracyclo[6.3.1.02,6.09,11]dodec-3-en-9-yl]-4-methyl-8-{[(2E)-2-methylbut-2-enoyl]oxy}octahydro-1H-furo[3',4':4,4a]5aphtha[1,8-bc]furan-5,10a(8H)-dicarboxylate).

Preferred systemic insecticides employed in the invention are the systemic **neonicotinoids,** and most preferred is Acetamiprid (IUPAC name (*E*)-*N*1-[(6-chloro-3-pyridyl) methyl]-*N*2-cyano-*N*1-methylacetamidine).

Fungal pesticides of use in the invention are systemic fungicides selected from the systemic **benzimidazoles** such as Benomyl (IUPAC name methyl 1-(butylcarbamoyl)benzimidazol-2-ylcarbamate), Thiophanate-methyl (IUPAC name dimethyl 4,4'-(o-phenylene)bis(3-thioallophanate), Thiabendazole (IUPAC name 2-(thiazol-4-yl)benzimidazole) and Carbendazim (IUPAC name methyl benzimidazol-2-ylcarbamate), Fuberidazole (IUPAC name 2-(2'-furyl)benzimidazole); the systemic **imidazoles** such as Triflumizole (IUPAC name (*E*)-4-chloro-α,α,α-trifluoro-*N*-(1-imidazol-1-yl-2-propoxyethylidene)-o-toluidine), and Imazalil (IUPAC name (*RS*)-1-(β-allyloxy-2,4-dichlorophenylethyl) imidazole); the systemic **carbamates** such as Iprovalicarb (IUPAC name isopropyl 2-methyl-1-{[(*RS*)-1-p-tolylethyl]carbamoyl}-(*S*)-propylcarbamate), Propamocarb, (IUPAC name Propyl [3-(dimethylamino)propyl]carbamate), Methiocarb (IUPAC name 3,5-Dimethyl-4-(methylsulfanyl)phenyl N-methylcarbamate), BenDiocarb (IUPAC name (2,2-Dimethyl-1,3-benzodioxol-4-yl) N-methylcarbamate); the systemic **phenylamides** such as Carpropamid (IUPAC name a mixture of (1*R*,3*S*)-2,2-dichloro-*N*-[(*R*)-1-(4-chlorophenyl)ethyl]-1-ethyl-3-methylcyclopropanecarbox-amide, (1*S*,3*R*)-2,2-dichloro-*N*-[(*R*)-1-(4-chlorophenyl)ethyl]-1-ethyl-3-methylcyclopropanecarboxamide, (1*S*,3*R*)-2,2-dichloro-*N*-[(*S*)-1-(4-chlorophenyl)ethyl]-1-ethyl-3-methylcyclopropanecarboxamide and (1*R*,3*S*)-2,2-dichloro-*N*-[(*S*)-1-(4-chlorophenyl)ethyl]-1-ethyl-3-methylcyclopropanecarboxamide)); Metalaxyl (IUPAC name 2-[(2,6-dimethylphenyl)- (2-methoxy-1-oxoethyl) amino]propanoic acid methyl ester or methyl N-(methoxyacetyl)-N-(2,6-xylyl)-DL-alaninate); Metalaxyl-M (IUPAC name methyl N-(methoxyacetyl)-N-(2,6-xylyl)-D-alaninate); Benalaxyl (IUPAC name methyl N-(phenylacetyl)-N-(2,6-xylyl)-DL-alaninate); and Furalaxyl (IUPAC name methyl N-(2-furoyl)-N-(2,6-xylyl)-DL-alaninate); **the systemic phosphonates** such as Fosetyl-AI (IUPAC name aluminium tris(ethyl phosphonate)); the systemic **pyrimidines** such as Cyprodinil (an anilinopyrimidine - IUPAC name 4-cyclopropyl-6-methyl-*N*-phenylpyrimidin-2-amine); the systemic **pyridines** such as Pyrifenox (IUPAC name 2',4'-dichloro-2-(3-pyridyl)acetophenone (*EZ*)-O-methyloxime), Fenarimol (IUPAC name (*RS*)-2,4'-dichloro-a-(pyrimidin-5-yl)benzhydryl alcohol); the systemic **Piperidines** such as Fenpropidin ( IUPAC name 1-[(RS)-3-(4-tert-butylphenyl)-2-methylpropyl]piperidine ); the systemic **triazoles** such as Flusilazole (IUPAC name bis(4-fluorophenyl)(methyl)(1*H*-1,2,4-triazol-1-ylmethyl)silane), Tebuconazole (IUPAC name (*RS*)-1-p-chlorophenyl-4,4-dimethyl-3-(1*H*-1,2,4-triazol-1-ylmethyl)pentan-3-ol), Cyproconazole (IUPAC name (2*RS*,3*RS*;2*RS*,3*SR*)-2-(4-chlorophenyl)-3-cyclopropyl-1-(1*H*-1,2,4-triazol-1-yl)butan-2-ol), Propiconazole (IUPAC name (2*RS*,4*RS*;2*RS*,4*SR*)-1-[2-(2,4-dichlorophenyl)-4-propyl-1,3-dioxolan-2-ylmethyl]-1*H*-1,2,4-triazole), Prothioconazole (IUPAC name (*RS*)-2-[2-(1-chlorocyclopropyl)-3-(2-chlorophenyl)-2-hydroxypropyl]-2,4-dihydro-1,2,4-triazole-3-thione), Epoxyconazole (IUPAC name (2*RS*,3*SR*)-1-[3-(2-chlorophenyl)-2,3-epoxy-2-(4-fluorophenyl)propyl]-1*H*-1,2,4-triazole), Paclobutrazol (IUPAC name (2*RS*,3*RS*)-1-(4-chlorophenyl)-4,4-dimethyl-2-(1*H*-1,2,4-triazol-1-yl)pentan-3-ol), Bitertanol (IUPAC name (1*RS*,2*RS*;1*RS*,2*SR*)-1-(biphenyl-4-yloxy)-3,3-dimethyl-1-(1*H*-1,2,4-triazol-1-yl)butan-2-ol), Triadimefon (IUPAC name (*RS*)-1-(4-chlorophenoxy)-3,3-dimethyl-1-(1*H*-1,2,4-triazol-1-yl)butan-2-one); systemic Strobilurins (aka Qol fungicides) and the systemic **morpholines** such as Spiroxamine (IUPAC name 8-tert-butyl-1,4-dioxaspiro[4.5]decan-2-ylmethyl(ethyl)(propyl)amine); Fenpropimorph (IUPAC name cis-2,6-Dimethyl-4-{2-methyl-3-[4-(2-methyl-2-propanyl)phenyl]propyl}morpholine or (2R,6S)-4-[3-(4-tert-butylphenyl)-2-methylpropyl]-2,6-dimethylmorpholine); Tridemorph (IUPAC name 2,6-Dimethyl-4-tridecylmorpholine) and the like.

Preferred systemic fungicides include the $Q_o$I fungicides or Strobilurins, such as Azoxystrobin (IUPAC name Methyl (2E)-2-(2-{[6-(2-cyanophenoxy)pyrimidin-4-yl]oxy}phenyl)-3-methoxyacrylate); Dimoxystrobin (IUPAC name (E)-2-(methoxyimino)-N-methyl-2-[α-(2,5-xylyloxy)-o-tolyl]acetamide); Enestrobin or Enestroburin (IUPAC name methyl-2-{2[({[3-(4-chlorophenyl)-1-methylprop-2-enylidene]amino}oxy)methyl]phenyl}-3-methoxyacrylate); Fluoxastrobin (IUPAC name (E)-{2-[6-(2-chlorophenoxy)-5-fluoropyrimidin-4-yloxy]phenyl}(5,6-dihydro-1,4,2-dioxazin-3-yl)methanone O-methyloxime); Pyraclostrobin (IUPAC name methyl N-{2-[1-(4-chlorophenyl)-1H-pyrazol-3-yl]oxymethyl]phenyl}(Nmethoxy) carbamate); and picoxystrobin (IUPAC name methyl (2E)-3-methoxy-2-{2-[6-(trifluoromethyl)-2-pyridyloxymethyl]phenyl}acrylate. The most preferred systemic fungicide is Azoxystrobin.

The electrostatic particles of the invention may comprise one or more systemic insecticides and/or one or more systemic fungicides, depending on design, the seeds to which the pesticides are added, and end purpose.

The electrostatic particles of the invention may be made from any material suitable for carrying a systemic pesticide and capable of holding an electrostatic charge. Such materials should be capable of being rendered into particulate form and able to carry added systemic pesticides. The electrostatic particles attach to the seed coat via electrostatic forces sufficiently long enough to permit the seed to take up the systemic pesticide therefrom. Typically, electrostatic particles of use in the invention are loaded with systemic pesticide, for example as described in the examples section (see below), and mixed within a seed mass.

Preferably, waxes of use in the invention include waxes having a melting point of ≥50°C, and most preferably are made up of so-called hard waxes having a melting point of ≥70°C.

Synthetic waxes of use in the present invention include suitable waxes selected from paraffin wax, microcrystalline wax, Polyethylene waxes, Fischer-Tropsch waxes, substituted amide waxes, polymerized α-olefins and the like.

Mineral waxes of use as flowability enhancing agents in the invention include montan wax (e.g. Luwax® BASF) ceresin wax, ozocerite, peat wax and the like.

Suitable waxes of use in the invention as carriers of systemic pesticides include those selected from paraffin wax, polyethylene waxes, beeswax, carnauba wax, lanolin, shellac wax, bayberry wax, sugar cane wax, ozocerite, ceresin wax, montan wax, candelilla wax, castor wax, wool wax, microcrystalline wax, ouricury wax, Chinese wax, spermaceti wax, myricyl palmitate, cetyl palmitate, retamo wax and rice bran wax and mixtures of two or more thereof. Examples of natural waxes of use in the present invention include carnauba wax, candelilla wax, castor wax, ouricury wax, wool wax, sugar cane wax, retamo wax, rice bran wax and the like. In a preferred embodiment, the electrostatic particles of use in the invention comprise substantially carnauba wax.

The skilled addressee will appreciate that the weight of electrostatic particles loaded with systemic pesticide(s) of choice that is applied to the seed will depend on the size of the seed, and the size of the particles. Thus, larger seeds may be able to support larger particles than smaller seeds but it is thought that the greater the surface area of the particles in contact with the seed coat, the more efficient will be the transfer of systemic pesticide(s) to the seed. Typically, the median diameter of particles of use in the invention lies in the range 1μm - 100 μm, more suitably 2 μm - 50 μm, and may be of about 1-2μm, 3μm, 4μm, 5μm, 6μm, 7μm, 8μm, 9μm, 10μm, 15μm, 20μm, 25μm, 30μm, 40μm, or 50μm +/- 6μm or any value therein or more depending on seed type and size of the seed. Preferably the particles of the invention are in the range of 10 - 100 μm, more preferably 10 - 75 μm, and most preferably 10 - 50 μm. Alternatively, the particles may have a VMD in the range of 5 - 50 μm.

Typically, the weight of electrostatic particles containing systemic pesticide applied per seed may be any weight value that lies in the range of up to 2mg per seed or up to 1.5mg per seed for example up to 1.0mg per seed. Naturally, the skilled addressee will understand that the amount of systemic pesticide that may be applied to a seed will vary with the size of the seed and the size of formulation particles. Typically, the weight of electrostatic particles per tonne of seed will be between 0.1kg and 30 kg, preferably between 0.8 kg and 20kg. For example, in the range of 2 to 20 kg for oilseed rape and 0.8 to 9 kg for maize.

The types of seeds that formulations of the invention can be applied to include plant seeds of commercial importance. For the purposes of the present invention it is also to be understood that the terms "seed" and "seeds" herein is used interchangeably unless context demands otherwise.

Seeds of commercial importance include cereal seeds such as rice (*Oryza sativa*), wheat (Triticum spp. such as *T. aestivum*) including species such as spelt (*T. spelta*), einkorn (*T. monococcum*), emmer (*T. dicoccum*) and durum (*T. durum*), barley (*Hordeum vulgare*) including two row and six row barley, sorghum (*Sorghum bicolor*), millet species such as pearl millet (*Pennisetum glaucum*), foxtail millet (*Setaria italica*), proso millet (*Panicum miliaceum*) and finger millet (*Eleusine coracana*), oats (*Avena sativa*), rye (*Secale cereale*), Triticale (*x Triticosecale*), buckwheat (*Fagopyrum esculentum*); cotton plant seeds of the family Malvaceae, typically *Gossypium hirsutum* (90% of world cotton production), *Gossypium barbadense* (8% of world cotton production), and *Gossypium arboreum* (2% of world cotton production); seeds of leguminous plants such as seeds of legume species of the family Fabaceae that including species such as Alfalfa (*Medicago sativa*), Austrian winter pea (*Pisum sativum*), Berseem clover (*Trifolium alexandrinum*), Black medic (*Medicago lupulina*), Chickling vetch/pea (*Lathyrus sativus*) Cowpea (*Vigna unguiculata*), Crimson clover (*Trifolium incarnatum*), Field peas (*Pisum sativum subsp. arvense*), Hairy vetch (*Vicia villosa*), Horse beans (*Vicia faba*), Kura clover (*Trifolium ambiguum*), Mung beans (*Vigna radiate*), Red clover (*Trifolium pratense*), Soya beans (*Glycine max*), Subterranean clover (*Trifolium subterraneum*), Sunn hemp (*Crotalaria juncea L*), White clover (*Trifolium repens*), White sweet clover (*Melilotus alba*), Woolypod vetch (*Vicia villosa ssp. dasycarpa*), Yellow sweet clover (*Melilotus officinalis*), Adzuki bean, (Vigna angularis, syn.: *Phaseolus angularis*), Broad bean (*V. faba* var. major), field bean (*Vicia faba*), Vetch (*Vicia sativa*), Common beans (*Phaseolus vulgaris*), including green beans, runner beans, haricot beans and the like, Chick pea (*Cicer arietinum*), Guar bean (*Cyamopsis tetragonoloba*), Hyacinth bean (*Dolichos lablab*), Lentil (*Lens culinaris*), Lima bean (*Phaseolus lunatus*), Lupin (*Lupinus* spp.), Mung bean (*Vigna radiata,* syn.: *Phaseolus aureus*), Pea (*Pisum sativum*), Peanut (*Arachis hypogaea*), Pigeon pea (*Cajanus cajan*), Tepary bean (*Phaseolus acutifolius*) and the like; maize seed from a *Zea mays* plant that is for food-related production or other industrial purpose such as starch production, bio-fuel manufacture, typically ethanol manufacture, animal fodder production and the like. Examples of Zea mays varieties used in industry include flour corn *(Zea mays* var. *Amylacea*); popcorn used as a food and in packaging materials (*Zea mays* var. *Evert*); flint corn used for hominy production ( *Zea mays* var. *Indurata*); sweet corn used as a food *(Zea mays* var. *saccharata* and *Zea mays* var. *Rugosa*); Waxy corn used in producing food thickening agents, in the preparation of certain frozen foods, and in the adhesive industry *(Zea mays* var. *Ceratina*); Amylomaize maiz used in the production of biodegradable plastics (*Zea mays*); and striped maize used as an ornamental *(Zea mays* var. *Japonica*). Maize is also known as "corn" and these two terms may be used interchangeably unless context demands otherwise. Also for the purposes of the present invention it is to be understood that the term "field crop plant seed" refers to "oilseeds" and "vegetable seeds" which are collectively referred to herein as "field crop plant seeds" unless context demands otherwise. Field crop plant seeds suitable for coating with compositions of use in the invention include oil seeds of the Crucifer family such as canola (*B. campestris*) and oilseed rape (*B. napus*); seeds of other Crucifer plant species including those of plants of the *B. oleraceae* such as seeds of types of cabbages, broccolis, cauliflowers, kales, Brussels sprouts, and kohlrabis; seeds of alliums including onion, leek and garlic. Other field crop plant seeds suitable for coating with compositions of use in the invention include capsicums, tomatoes, cucurbits such as cucumbers, cantaloupes, summer squashes, pumpkins, butternut squashes, tropical pumpkins, calabazas, winter squashes, watermelons, lettuces, zucchinis (courgettes), aubergines, carrots, parsnips, swedes, turnips, sugar beet, celeriacs, Jerusalem artichokes, artichokes, bok choi, celery, Chinese cabbage, horse radish, musk melons, parsley, radish, spinach, beetroot for table consumption, linseed, sunflower, safflower, sesame, carob, coriander, mustard, grape, flax, dika, hemp, okra, poppy, castor, jojoba and the like; Fodder crop plant seed of use in the invention is seed that may be grown as a stock feed for further processing such as in bio-fuel production, processed animal feed production, field planting for farm animal consumption and the like. For the purposes of the present invention it is to be understood that the term "fodder crop plant seed" refers to fodder crop plant seeds suitable for coating with compositions of use in the invention and includes species of the Poaceae, including *Lolium spp* such as Italian Ryegrass, Hybrid Ryegrass, and rye grasses such as perennial ryegrass (*Lolium perenne*); Festuca species such as red fescue, fescue, meadow fescue, Tall fescue, Lucerne Fescue, and the forage herbs such as chicory, Sheep's Burnett, Ribgrass (aka Robwort Plantain), Sainfoin, Yarrow, Sheep's Parsley and the like.

In a preferred embodiment, electrostatic particles of the invention are applied to seed selected from wheat, barley, rye, corn (maize), sorghum, soya bean, brassica spp. such as oilseed rape, for example, canola cultivars, sunflower, cotton, and rice. The electrostatic particles of the invention are preferably present on the seed in the form of a dry powder.

In a further aspect of the invention there is provided a method of producing compositions of the invention comprising:

 i) mixing at least one systemic pesticide with electrostatic particle material in a ratio of 50:50 to 10:90 wt. %;

 ii) placing the mixture of step i) in an autoclave and adding liquid $CO_2$ under pressure;

 iii) mixing the components of step ii) in liquid form under constant high temperature and constant pressure for a time period sufficient to complete mixing of all the components;

 iv) expanding the gas saturated product solution of step iii) through an aperture under high pressure into a spray receptacle;

 v) cooling the product of step iv) to below the solidification temperature of the wax forming fine particles; and

 vi) adding the fine particles of v) to seeds or to a population of seeds as herein described.

The ratio of systemic pesticide mixed with electrostatic particle material in step i) lies in the range 15:85 to 50:50wt%, preferably in the range of 20:80 to 50:50wt%, and more preferably in the range of 30:70 to 50:50wt%.

In step ii) of the method of producing seed of the invention, the mixing step ii) is conducted at a temperature in the range 50° to 200° Centigrade and a pressure in the range 10 MPa to 30 MPa in an autoclave. The temperature range will depend on the carrier and the pesticide. For example when the carrier is carnauba wax and the pesticide is acetamiprid the mixing step ii) is conducted at a temperature of 103° Centigrade +/- 3° C, and where the carrier is polyethylene wax and the pesticide is azoxystrobin the mixing step ii) is conducted at a temperature of 150° Centigrade +/-3°.

The mixing step iii) is conducted at a constant high temperature and pressure for a time interval or period sufficient to ensure complete mixing of all the components. Typically, the mixing period will be from about 1 minute to 180 minutes, preferably about 10 to about 120 minutes, and most preferably from about 30 to about 60 minutes. The temperature for step iii) will be in the range of 32 to 200 °C, preferably 50-150 °C.

Once the components of step iii) are thoroughly mixed, they are then released from the autoclave and into a spray receptacle at a pressure higher than that employed in step iii). The pressure in the receptacle will be lower than the pressure in the vessel to allow the carbon dioxide to expand forming small or micro particles. Typically, the pressure in the nozzle will be 10-30 MPa, preferably 14-20 MPa.

Typically the weight of electrostatic particles per tonne of seed will be between 0.1kg and 30 kg, preferably between 0.8 kg and 20kg. For example in the range of 2 to 20 kg per tonne for oilseed rape and 0.8 to 9 kg per tonne for maize.

The electrostatic particles employed in the 'use' aspect of the invention are present on the seed in the form of a dry powder. The systemic pesticides employed in the 'use' aspect of the invention are those as defined hereinabove and may be selected from one or more of a systemic insecticide and a systemic fungicide and mixtures of two or more thereof. Suitable systemic pesticides employable in the 'use' aspect of the invention are selected from organophosphates, carbamates, neonicotinoids, ryanoids, and plant-derived insecticides and the systemic fungicide is selected from benzimidazoles, imidazoles, carbamates, phenylamides, phosphonates, pyrimidines, pyridines, triazoles, morpholines, piperidines and Strobilurins as hereinbefore defined. Preferably, the systemic pesticide employed in the 'use' aspect of the invention is a systemic neonicotinoid insecticide, and most preferably is acetamiprid (IUPAC name (*E*)-*N*1-[(6-chloro-3-pyridyl) methyl]-*N*2-cyano-*N*1-methylacetamidine).

The electrostatic particles employed in the 'use' aspect of the invention may be applied to seeds as hereinbefore defined, and in particular to seeds selected from wheat, barley, rye, corn (maize), sorghum, soya bean, brassica spp. such as oilseed rape, for example canola cultivars, sunflower, cotton, and rice.

The electrostatic particles employed are present on the seed in the form of a dry powder. The systemic pesticides employed are those as defined hereinabove and may be selected from one or more of a systemic insecticide, a systemic acaricide and a systemic fungicide or mixtures of two or more thereof. Most preferably the systemic pesticide is a neonicotinoid and especially acetamiprid.

The method may be applied to seeds as hereinbefore defined, and in particular to seeds selected from wheat, barley, rye, corn (maize), sorghum, soya bean, brassica spp. such as oilseed rape, for example canola cultivars, sunflower, cotton, and rice.

Typically, the amount of pesticide contained in the particles will be $\geq 10\%$ w/w, preferably $\geq 20\%$ w/w. The quantity of pesticide in the particles will typically be $\geq 30\%$, may be $\geq 40\%$ or may be up to 50% w/w.

There now follow figures and experimental data. It is to be understood that the teaching of the figures and the examples is not to be construed as limiting the invention in any way.

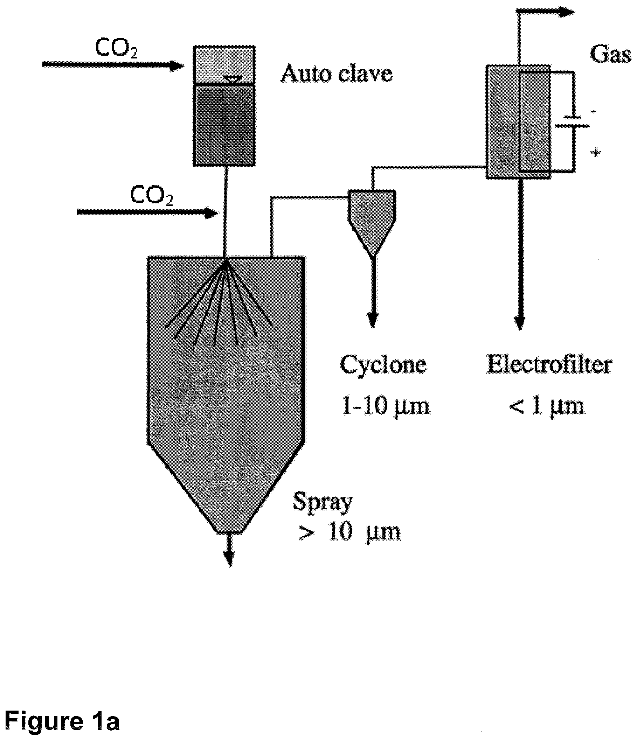

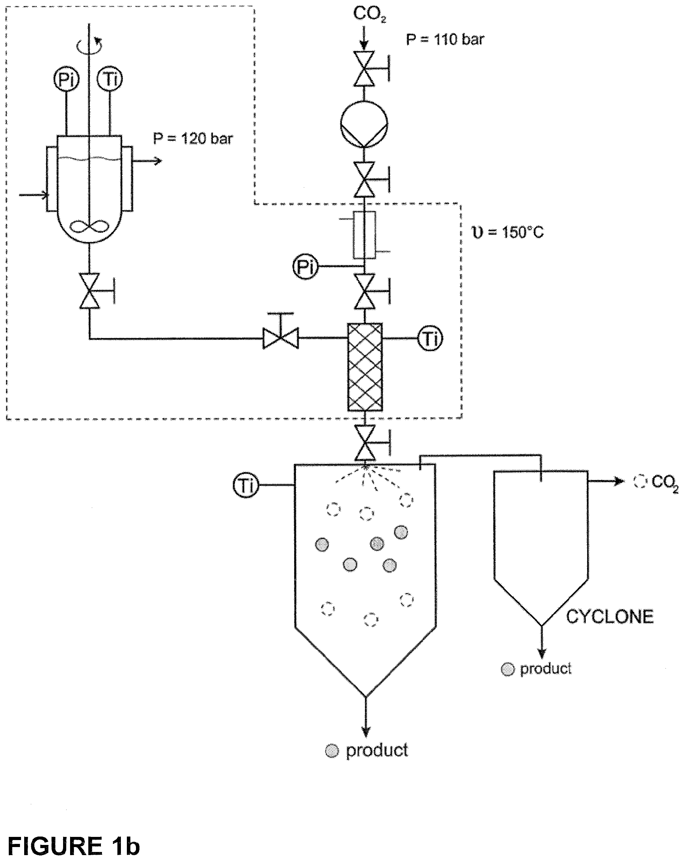

**Figure 1a & b:** Diagram batch operated apparatus for PGSS™ micronization (Knez and Weidner, 2003).

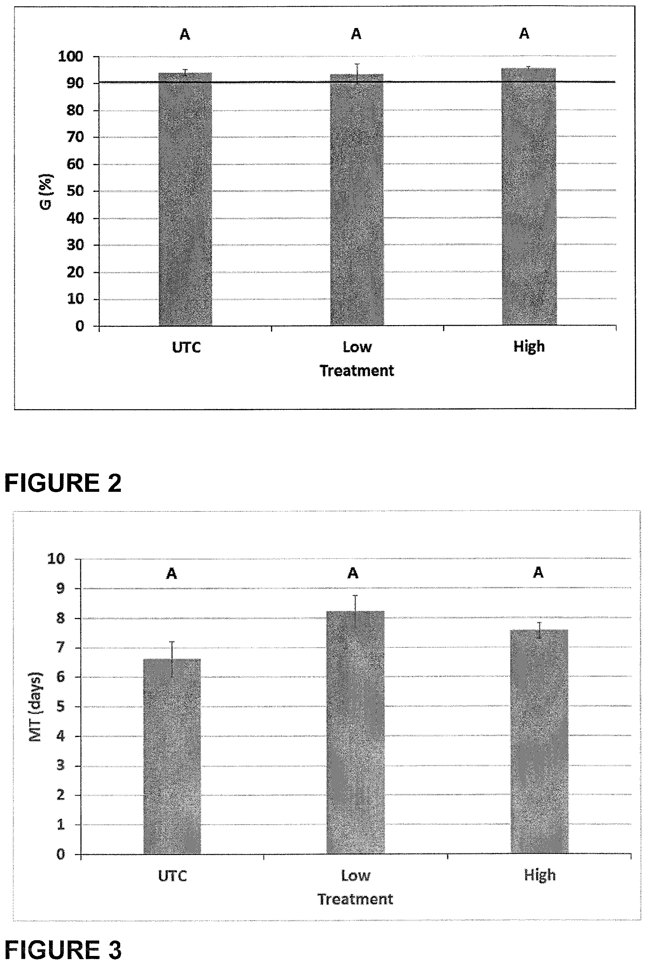

**Figure 2:** The mean (+/- SE) germinability (%) of maize seeds treated with acetamiprid "Entostat®" formulations at two different application rates, "high" and "low". The untreated control "UTC" is untreated seed. There was no difference in germinability between the treatments (ANOVA $F_{2,6}$ = 0.12, P = 0.889). Columns which share a letter are not significantly different according to Tukey's HSD post hoc test. The horizontal line represents the EC minimum germination standard which is established as 90%.

**Figure 3:** The mean (+/- SE) germination time (days) of maize seeds treated with acetamiprid "Entostat®" formulations", at two different application rates, "high" and "low". The untreated control "UTC" is untreated seed. There was no difference in germination time between the treatments (ANOVA $F_{2,6}$ = 2.70, P = 0.146). Columns which share a letter are not significantly different according to Tukey's HSD post hoc test.

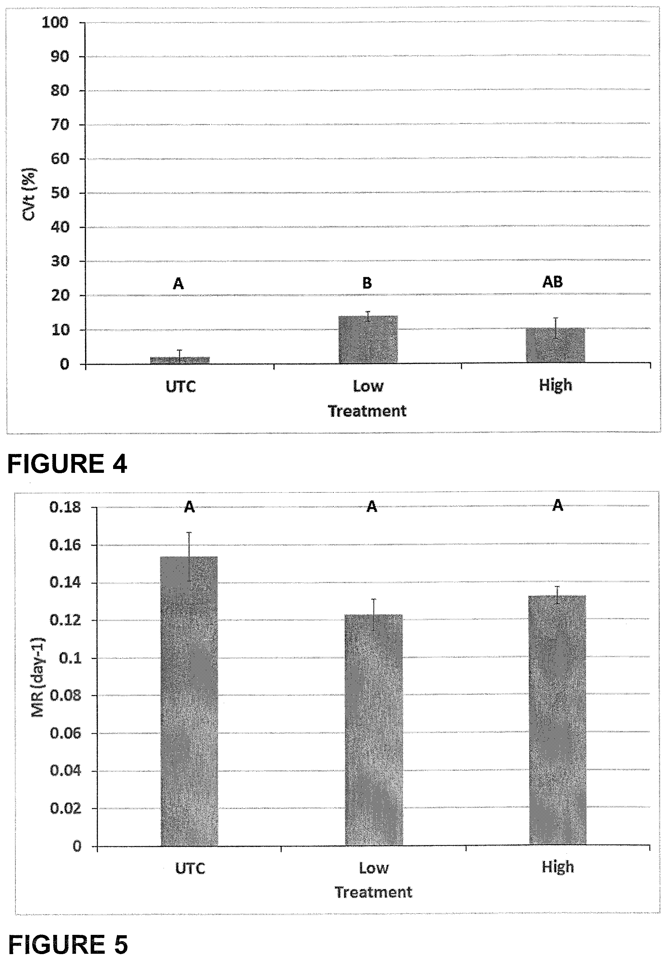

**Figure 4:** The mean (+/- SE) coefficient of variation of the germination time of maize seeds treated with acetamiprid "Entostat®" formulations at two different application rates, "high" and "low". The untreated control "UTC" is untreated seed. There was a significant difference in coefficient of variation of the germination time between the treatments (ANOVA $F_{2,6}$ = 7.31, P = 0.025). Columns which share a letter are not significantly different according to Tukey's HSD post hoc test.

**Figure 5:** The mean (+/- SE) germination rate of maize seeds treated with acetamiprid "Entostat®" formulations at two different application rates, "high" and "low". The untreated control "UTC" is untreated seed. There was no difference in germination rate between the treatments (ANOVA $F_{2,6}$ = 2.94, P = 0.129). Columns which share a letter are not significantly different according to Tukey's HSD post hoc test.

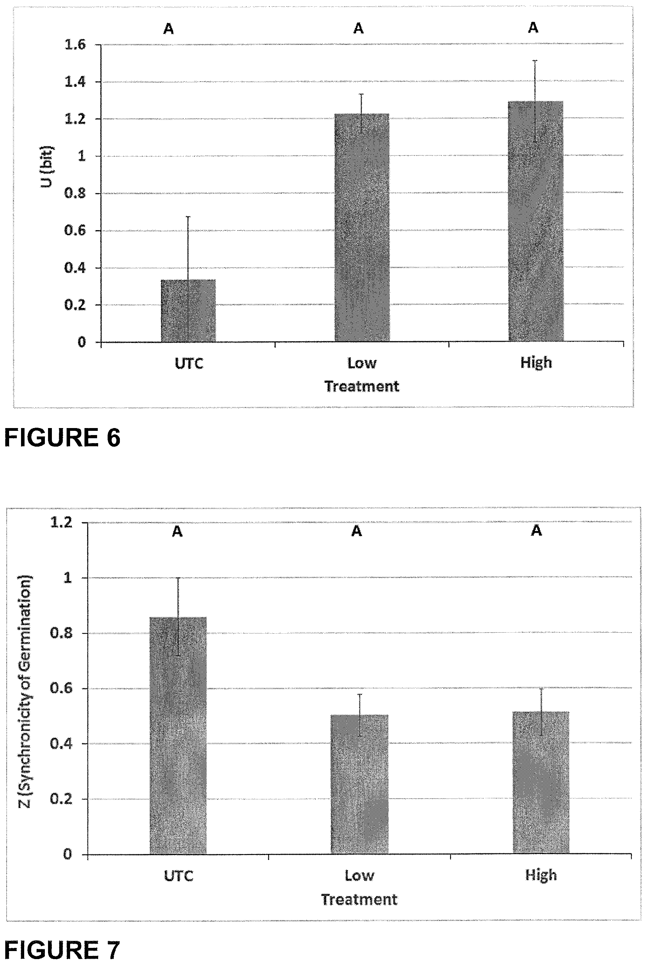

**Figure 6:** The mean (+/- SE) uncertainty of the germination process of maize seeds treated with acetamiprid "Entostat®" formulation at two different application rates, "high" and "low". The untreated control "UTC" is untreated seed. There was no difference in the uncertainty of the germination process between the treatments (ANOVA $F_{2,6}$ = 4.93, P = 0.054). Columns which share a letter are not significantly different according to Tukey's HSD post hoc test.

**Figure 7:** The mean (+/- SE) synchronicity of germination of maize seeds treated with acetamiprid "Entostat®" formulations at two different application rates, "high" and "low". The untreated control "UTC" is untreated seed. There was no difference in synchronicity of germination between the treatments (ANOVA $F_{2,6}$ = 3.80, P = 0.086). Columns which share a letter are not significantly different according to Tukey's HSD post hoc test.

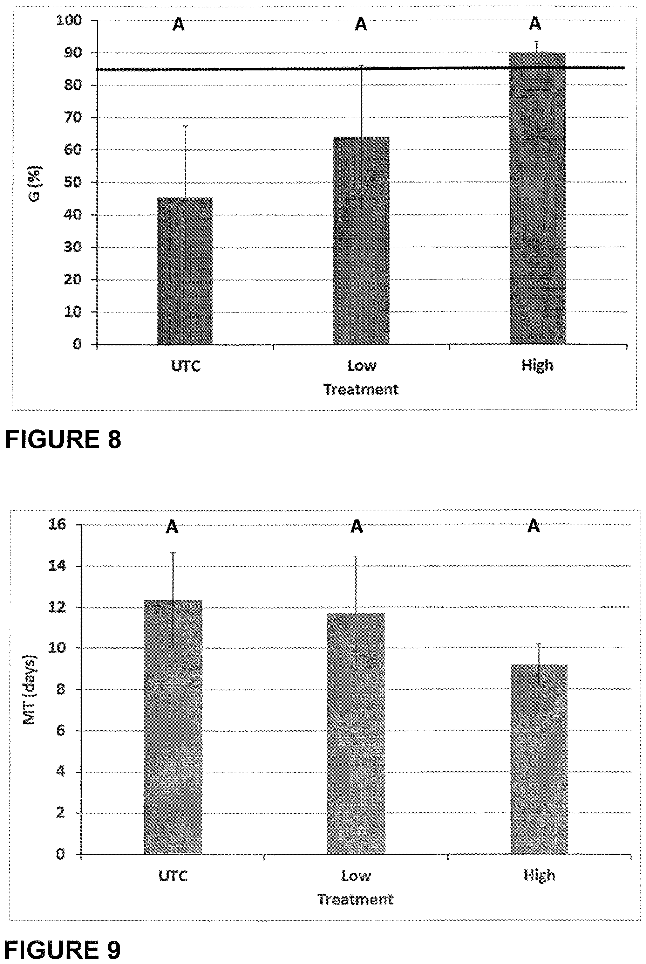

**Figure 8:** The mean (+/- SE) germinability of oilseed rape seeds treated with acetamiprid "Entostat®" formulations

at two different application rates, "high" and "low". The untreated control "UTC" is untreated seed. There was no difference in germinability between the treatments (ANOVA $F_{2,6}$ = 1.36, P = 0.325). Columns which share a letter are not significantly different according to Tukey's HSD post hoc test. The horizontal line represents the EC minimum germination standard which is established as 85%.

**Figure 9:** The mean (+/- SE) germination time of oilseed rape seeds treated with acetamiprid "Entostat®" formulations at two different application rates, "high" and "low". The untreated control "UTC" is untreated seed. There was no difference in germination time between the treatments (ANOVA $F_{2,6}$ = 0.596, P = 0.581). Columns which share a letter are not significantly different according to Tukey's HSD post hoc test.

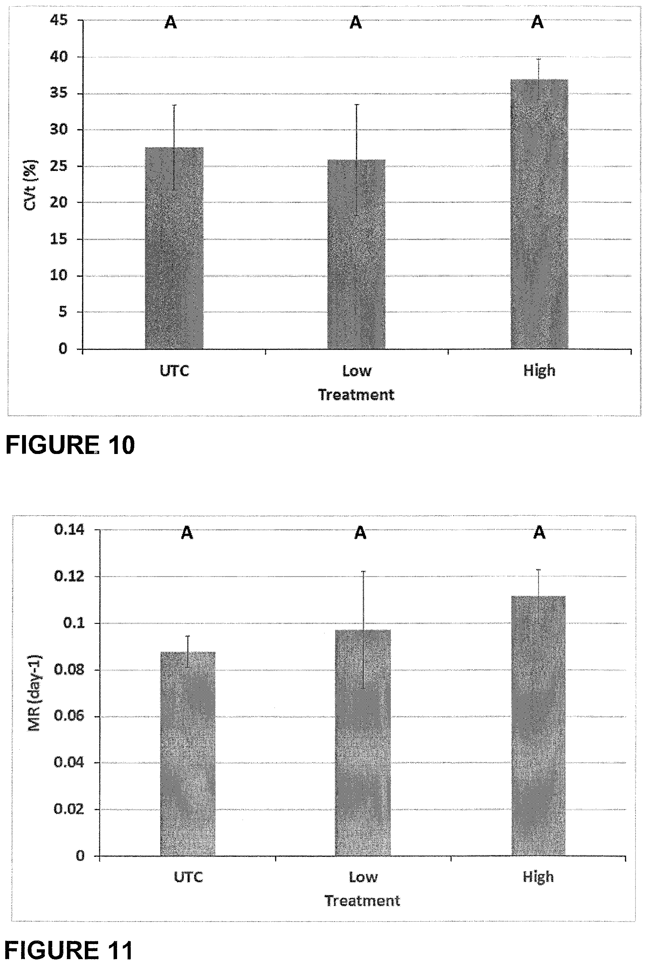

**Figure 10:** The mean (+/- SE) coefficient of variation of the germination time of oilseed rape seeds treated with acetamiprid "Entostat®" formulations at two different application rates, "high" and "low". The untreated control "UTC" is untreated seed. There was no difference in coefficient of variation of the germination time between the treatments (ANOVA $F_{2,6}$ = 1.100, P = 0.392). Columns which share a letter are not significantly different according to Tukey's HSD post hoc test.

**Figure 11:** The mean (+/- SE) germination rate of oilseed rape seeds treated with acetamiprid, "Entostat®" formulations at two different application rates, "high" and "low". The untreated control "UTC" is untreated seed. There was no difference in germination rate between the treatments (ANOVA $F_{2,6}$ = 0.382, P = 0.698). Columns which share a letter are not significantly different according to Tukey's HSD post hoc test.

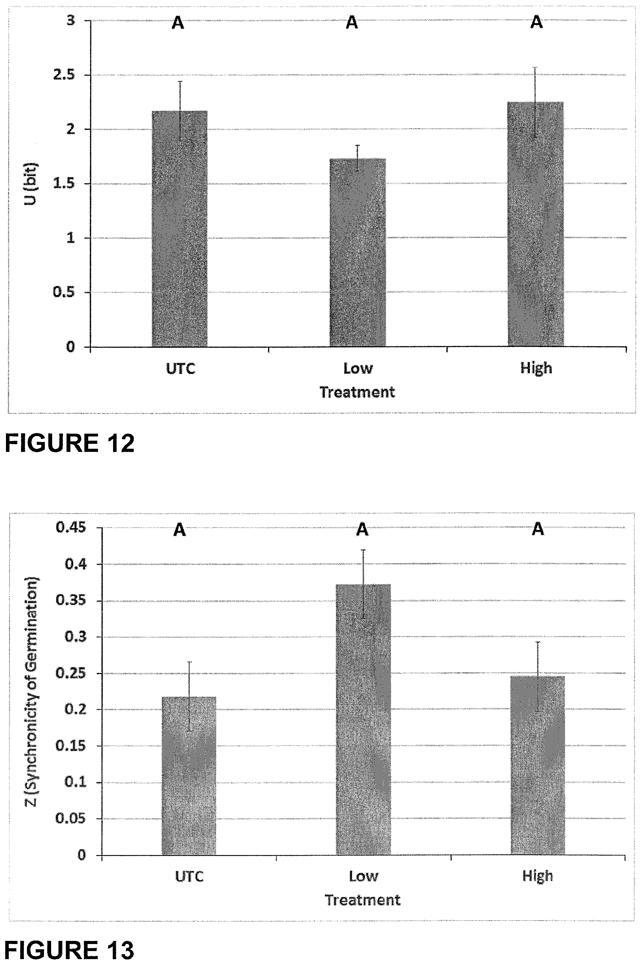

**Figure 12:** The mean (+/- SE) uncertainty of the germination process of oilseed rape seeds treated with acetamiprid, "Entostat®" formulations at two different application rates, "high" and "low". The untreated control "UTC" is untreated seed. There was no difference in uncertainty of the germination process between the treatments (ANOVA $F_{2,6}$ = 1.208, P = 0.362). Columns which share a letter are not significantly different according to Tukey's HSD post hoc test.

**Figure 13:** The mean (+/- SE) synchronicity of germination of oilseed rape seeds treated with acetamiprid "Entostat®" formulations at two different application rates, "high" and "low". The untreated control "UTC" is untreated seed. There was no difference in synchronicity of germination between the treatments (ANOVA $F_{2,6}$ = 2.052, P = 0.209). Columns which share a letter are not significantly different according to Tukey's HSD post hoc test.

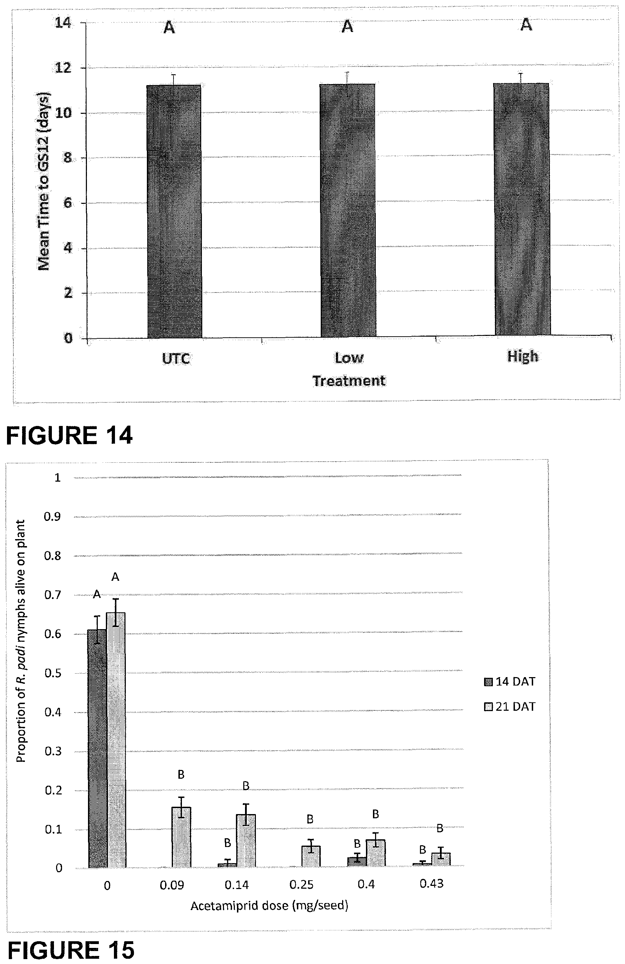

**Figure 14:** The mean (+/- SE) time to reach GS12 (days) for maize seeds treated with acetamiprid formulations at two different application rates, "high" and "low". The untreated control "UTC" is untreated seed. There was no difference in mean time to reach grow stage 12 between the treatments (ANOVA $F_{2,12}$ = 0.001, P = 0.999). Columns which share a letter are not significantly different according to Tukey's HSD post hoc test.

**Figure 15:** The proportion of *Rhopalosiphum padi* nymphs surviving (+/- binomial standard error) on untreated (0 mg/seed) and acetamiprid treated (0.09, 0.14, 0.25, 0.40, 0.43 mg/seed) maize plants 48 hours after introduction. Nymphs were introduced to plants at 14 (dark gray) and 21 (light gray) days after treatment (DAT). A difference in lettering above a bar indicates a significant difference (p < 0.001) between doses and/or treatments.

## EXAMPLES

The neonicotinoids imidacloprid, thiamethoxam and clothianidin are widely formulated for use as seed treatments, particularly in cotton, maize, cereals, sugar beet and oilseed rape crops for the control of insect pests (Elbert *et al.,* 2008). Neonicotinoids are systemic insecticides applied as seed treatments to control a variety of pests during the early stages of plant growth (approximately 30-40 days of growth): aphids, crucifer flea beetle, leaf hoppers, wireworms, slugs, corn root worm, black cut worm, and nematodes. The neonicotinoid acetamiprid also provides effective control of insect pests, however, as microbial activity rapidly degrades this active in the soil, acetamiprid seed treatments have not been successfully commercialised (Liu *et al.,* 2011; Elbert *et al.,* 2008). Commission Implementing Regulation (EU) 485/2013 restricts the use of clothianidin, imidacloprid and thiamethoxam seed treatments on crops considered to be attractive to bees. This legislation has reduced the number of crop protection products available to growers and has prioritised the development of active ingredients such as acetamiprid as replacements.

Strobilurin is a naturally occurring compound produced by some Basidiomycete fungi (e.g. Strobilurus tenacellus) and myxobacteria (e.g. Myxococcus fulvus) (Bartlett et al 2001; Bertelsen et al 2001). Although too unstable to use as a fungicide in its natural form, knowledge that Strobilurin possessed a methyl (E)-3-methoxy-2-(5-phenylpenta-2,4-dienyl) acrylate Moiety, led to the creation of the synthetic β-methoxyacryiates (Strobilurin) class of fungicides (Fernández-Ortuño et al 2010). The Strobilurins are a member of the C3 - quinone outside inhibitor (QoI) - fungicide mode of action (MOA) (FRAC 2016). They induce death by inhibiting the ubihydroquinone oxidation (Qo) centre of the cytochrome bc1 complex (complex III) to prevent electron transport during mitochondrial respiration (Sudisha et al 2005). To date, six Strobilurin fungicides have been commercialised: Azoxystrobin, Kresoxim-methyl, Metominostrobin, Trifloxystrobin, Pyraclostrobin, and Picoxydtrobin (FRAC 2016). The first, Azoxystrobin, was marketed by Syngenta in 1996 (Bartlett et al 2001). By 2006, Strobilurins accounted for 20% of the global fungicide market (Fernández-Ortuño et al 2010). With all Strobilurins being broad spectrum fungicides (exhibiting efficacy against Ascomycete, Basidiomycete, Deuteromycete, and Oomycete fungi) and applicable to a wide variety of crops (e.g. cereals, vegetables, and fruits) (Bartlett et al 2001), they have become an indispensable class of fungicides.

The purpose of these studies was to:

1. Investigate whether Entostat® technology, namely electrostatic particles could be formulated with a systemic pesticide to develop a novel seed treatment. Pesticides formulated include the insecticide acetamiprid and the fungicide azoxystrobin.

2. Determine whether an Entostat® formulated systemic pesticide (the insecticide acetamiprid) has any adverse effect on seed germination (maize and oilseed rape) and/or growth (maize only) when applied as a seed treatment at rates equivalent to those used in commercial neonicotinoid seed treatment formulations.

3. Confirm the systemic activity of the Entostat® formulated pesticide seed treatment (the insecticide acetamiprid)

4. Confirm that the Entostat® formulated pesticide seed treatment delivers sufficient systemic activity to be used to control piercing/sucking foliage feeding insects (e.g. aphids).

## Materials and methods

### OBJECTIVE 1a FORMULATION OF ELECTROSTATIC WAXES WITH A NEONICOTINOID INSECTICIDE

For the formulation of micro particles, the Particles from Gas Saturated Solutions (PGSS™) technique was used (see Figure 1 for schematic). Carnauba wax (50 wt. %) and acetamiprid (50 wt. %) were mixed together in mass ratio 1:1 and were placed into the autoclave.

Once the autoclave was filled with the mixture, liquid $CO_2$ was compressed into the system by means of a high-pressure pump. When the desired pressure and temperature were reached, the mixing of the system began. The system was shaken at constant temperature and pressure (103 °C, 16 MPa) until the equilibrium was reached (approximately 120 min).

When the system is equilibrated, the $CO_2$ is solubilized in the mixture of substances. The gas saturated solution was then rapidly expanded through the nozzle (the nozzle diameter was 0.4 mm) with the overpressure of 17 MPa in a spray tower (expansion unit) and the gas ($CO_2$) evaporated.

Owing to the Joule-Thomson effect and/or the evaporation and the volume-expansion of the gas, the solution was cooled down below the solidification temperature of the solute, and fine particles were formed as shown schematically in Figure 1 (Knez and Weidner 2003).

### Analysis of acetamiprid in Entostat® powder - carnauba variant

The active acetamiprid was extracted from the wax matrix by ultrasonication into a suitable extraction solvent and analysed by High Performance Liquid Chromatography (HPLC) order to achieve separation from the non-actives. Detection was by UV and quantitation was by internal standard.

### Chromatographic conditions

| Column | Poroshell 120 SB-AQ 2.1x 50.0mm 2.7μm |
|---|---|
| Detector | UV 254nm<br>Slit 4nm |
| Inlet System | Autosampler<br>Draw speed 200μl<br>Eject speed 200μl<br>Low pressure set 5 bar<br>High pressure set 600bar |
| Injection Volume | 3μl |
| Column oven | 40°C |
| Mobile phase | Flow 0.6ml/min<br>Time (mins)　　　%MeOH　　　% Water<br>　　　　　+ 0.5% CH₃COOH　+ 0.5% CH₃COOH |

(continued)

|  | 0 | 5.0 | 95.0 |
|---|---|---|---|
|  | 5.0 | 5.0 | 95.0 |
|  | 5.2 | 95.0 | 5.0 |
|  | 7.0 | 95.0 | 5.0 |
|  | 7.2 | 5.0 | 95.0 |
|  | 10.0 | 5.0 | 95.0 |
| Run time | 10 min. | | |
| Approximate Retention Times | Internal standard | 2.4 min. | |
|  | Active components | 7.0min. | |

**Preparation of standards.**

For the internal standard, 5mg/ml Thiamethoxam was made up by adding 0.25mg of Thiamethoxam to 50mls of Dichloromethane in a volumetric flask. For the calibration standard a stock solution of 5mg/ml acetamiprid was made up by adding 0.25mg of acetamiprid to 50mls of Dichloromethane in a volumetric flask. The required volume of internal standard and acetamiprid stock solutions were pipetted into 5 extraction bottles containing 50ml of extraction solvent.

**Sample Extraction**

9-11 mg of sample formulation was weighed into a 60ml bottle in triplicate and 50ml of extraction solvent and the required volume of the internal standard were added. The bottle was shaken vigorously for 5 seconds, placed in an ultrasonic bath heated to 35 °C and sonicate for 5 mins. The bottles were removed from the heat and shaken vigorously to re-disperse the product. These two steps were repeated in triplicate. The extracts were left to settle overnight, after which time 250ul of the dichloromethane extract layer was pipetted into a GC vial. The uncapped vials were placed into a sample concentrator set at 36 °C to allow the solvent to evaporate. This was repeated for Analytical Quality Control (AQC) samples and calibration standards.

To prepare the AQC samples 10mg of blank matrix (Entostat® - carnauba variant) was weighed into a 60ml bottle and the required amount of AQC solution and the internal standard were added to 50ml of dichloromethane

The samples, calibration standards and AQC samples were redissolved in 1ml of 49.5:49.5:1 acetonitrile: water: acetic acid by heating them on the sample concentrator for 5 mins at 36 °C, capping and vortexing for 1min. The samples and AQC's were transferred into a 2ml syringe and dispensed through a 13mm 0.45$\mu$m nylon syringe filter into a new 1.5 ml GC vial. Each vial was capped and analyzed by Liquid Chromatograph (LC).

**Calibration**

A graph of peak area ratio PAR ( peak area / peak area IS) (y axis) vs concentration (x axis) was constructed for the calibration standards. A linear trendline was used to find the line of best fit and display the coefficient of determination $r^2$ and the equation for the line y = mX + c. The data was accepted if the $r^2$ value was > 0.98.

**Samples**

$$\text{Acetamiprid concentration mg/extract} = \frac{(PAR - c) \times 50}{m \times 1000}$$

Where:

PAR =    peak area ratio  
c =    constant  
m =    slope  
50 =    volume of extract

## OBJECTIVE 1b FORMULATION OF ELECTROSTATIC WAXES WITH A STROBILURIN FUNGICIDE

For the formulation of micro particles, the Particles from Gas Saturated Solutions (PGSS™) technique was used (see Figure 1b for schematic). Polyethylene wax (50 wt. %) and Azoxystrobin (50 wt. %) were mixed together at a ratio of 1:1 (mass) and placed into the autoclave.

The melt of substance was intensively mixed (100 rpm) to homogenize the melt of PE wax and azoxystrobin in an autoclave heated to temperature of 150 °C under pressure of $CO_2$ of 120 bar so that the system should be pre-saturated with $CO_2$. Homogenization time was 120 minutes. $CO_2$ pre-saturated melt of PE wax and azoxystrobin to the static mixer was feed to static mixer due to higher pressure in the feed autoclave. Separate continuous flows of $CO_2$ (at pressure 110 bar) performed by high pressure pump was mixed together with feed in a static mixer prior reaching the spraying tower. The continuous flow of substances was hereby saturated (at operating pressure and temperature) with $CO_2$. $CO_2$ flow should be preheated. All connections, together with static mixer, to the spray tower were heated to temperatures of 150 °C. Experiment were performed with nozzle model 121V, orifice 0.6mm, spraying angle 60°, from company Düsen-Schlick GmbH.

Owing to the Joule-Thomson effect and/or the evaporation and the volume-expansion of the gas, the solution was cooled down below the solidification temperature of the solute, and fine particles were formed as (Knez and Weidner 2003).

### Analysis of Azoxystrobin in Entostat® powder- polyethylene variant

The active Azoxystrobin was extracted from the wax matrix by ultrasonication into a suitable extraction solvent and analysed by Gas Chromatography (GC) in order to achieve separation from the non-actives. Detection was by uECD (micro electron capture detector) and quantitation was by internal standard.

### Chromatographic conditions

| Column | Restek RXI-5MS. Length 15 m Diam. 0.25 mm Film thickness 0.25 um Pressure 17 PSI. Internal flow 1.4 ml/min. Average velocity 51 cm /sec |
|---|---|
| Detector | Micro ECD Temp 330 °C Mode constant make up flow Make up flow 30 ml /min Make up gas $N_2$ Data rate: 20 Hz |
| Inlet System | BACK INLET (SPLIT/SPLITLESS) Mode: Split Initial temp: 250 °C (On) Pressure: 17.0 psi (On) Split ratio: 100:1 Split flow: 140.1 mL/min Total flow: 144.3 mL/min Saver flow: 20.0 mL/min Saver time: 2.00 min Gas type: Helium |
| Injection Parameters | Solvent Wash Mode: A-A3, B-B3 Sample pumps: 3 Sample Volume (uL): 1.000 |

(continued)

| | Syringe size (uL): 10.0 Plunger Speed: Fast |
|---|---|
| Oven | Equilibration time: 3.00 min<br>Maximum temp: 320 °C<br>Initial temp: 250 °C<br>Initial time: 12.00 min<br>Ramps:<br># (min)      Rate (°C /min)    Final temp (°C)    Final time<br>1             20.00            320              9.00<br>2             0               (Off)<br>Post temp:        260 °C<br>Post time:         0.00 min |
| Run time | 21.58 min. |
| Approximate Retention Times | Internal standard    9.135 min.<br>Active component    10.095 min. |

**Preparation of standards.**

For the internal standard, 247.5 mg of Deltamethrin was added to 50mls of Dichloromethane in a volumetric flask. For the calibration standard a stock solution was made up by adding 100 mg of Azoxystrobin to 20 mls of Dichloromethane in a volumetric flask. The required volume of internal standard and Azoxystrobin stock solutions were pipetted into 5 extraction bottles containing 50ml of extraction solvent.

**Sample Extraction**

20 mg of sample formulation was weighed into a 60ml bottle in triplicate and 50ml of extraction solvent and the required volume of the internal standard were added. The bottle was shaken vigorously for 5 seconds, placed in an ultrasonic bath heated to 35 °C and sonicate for 5 mins. The bottles were removed from the heat and shaken vigorously to re-disperse the product. These two steps were repeated in triplicate. The extracts were left to settle for at least 2 hours, after which time 1 ml of the dichloromethane extract layer was pipetted into a GC vial and analysed. This was repeated for Analytical Quality Control (AQC) samples and calibration standards.

To prepare the AQC samples 10mg of blank matrix (Entostat® - polyethylene variant) was weighed into a 60ml bottle and the required amount of AQC solution and the internal standard were added to 50ml of dichloromethane.

**Calibration**

A graph of peak area ratio PAR ( peak area / peak area IS) (y axis) vs concentration (x axis) was constructed for the calibration standards. A linear trendline was used to find the line of best fit and display the coefficient of determination $r^2$ and the equation for the line y = mX + c. The data was accepted if the $r^2$ value was > 0.98.

**Samples**

$$\text{Azoxystrobin concentration mg/extract} = \frac{(PAR - c)}{m \times 1000} \times 50$$

Where:

PAR = peak area ratio
c = constant

m = slope
50 = volume of extract

## OBJECTIVE 2 CONFIRM ENTOSTAT FORMULATED ACETAMIPRID HAS NO ADVERSE EFFECT ON SEED GERMINATION AND/OR PLANT GROWTH

Test & Reference Item Details

| | |
|---|---|
| Test item type: | Acetamiprid formulated with carnauba wax, for use as a systemic insecticidal seed treatment. |
| Test item contents: | Acetamiprid and carnauba wax were formulated at a ratio of 37:63. |
| Test item rate: | The formulation was applied to seed at high and low rates based on typical commercial application rates of neonicotinoids. |
| Reference item type: | Untreated naked seeds |
| Application interval: | Applied once to seed at the start of the experiment |

Naked oilseed rape (OSR) and maize seeds were used in this study. Seed variety, source, batch number and thousand grain weight (TGW) are detailed in Table 1.

**Table 1:** *Seed details*

| Seed Type | Variety | Source | Batch Number | TGW (grams) |
|---|---|---|---|---|
| Maize | Ambition | Limagrain | F0964T012312SM | 303 |
| Oilseed Rape | Amalie | Limagrain | None provided | 4.3 |

The higher application rates of the active ingredient were based on the highest commercial application rates of Gaucho® (imidacloprid) and Poncho® (clothianidin) on maize and Gaucho® (imidacloprid) on oilseed rape. The lower application rate was a logarithmic dilution of the high application rate (Table 2). Untreated seeds were included as negative controls according to EPPO guideline PP 1/135 (4) 'Efficacy evaluation of plant protection products; Phytotoxicity assessment'.

**Table 2:** *Application rates of seed treatment formulations in maize and oilseed rape (OSR).*

| Seed Type | Ratio Acetamiprid in formulation | Acetamiprid application rate (mg per seed) | Acetamiprid application rate (g per kg seed)* | Formulation application rate (% w/w) | Formulation application rate (kg per tonne) |
|---|---|---|---|---|---|
| Maize | 37:63 | 0.925 | 3.056 | 0.83 | 8.3 |
| Maize | 37:63 | 0.093 | 0.303 | 0.08 | 0.8 |
| Maize | 0 | 0.000 | 0.00 | 0.00 | 0.0 |
| OSR | 37:63 | 0.032 | 7.40 | 2.00 | 20.0 |
| OSR | 37:63 | 0.003 | 0.74 | 0.20 | 2.0 |
| OSR | 0 | 0.000 | 0.00 | 0.00 | 0.0 |
| *Calculated using TGWs detailed in Table 1 | | | | | |

**Validation of loading rates**

The concentration of acetamiprid in each formulation was determined using liquid chromatography analysis. For higher loading on Maize, 5 replicate extractions were carried out on single seeds, for the lower loading 5 replicate extractions were carried out on 2 seeds. In the OSR treatments, three replicate extractions were carried out on 6 seeds for the higher loading or 30 seeds for the lower loading. The seeds were counted and in the case of OSR counted and weighed into 60ml bottles.

100ul Thiomethoxam Internal standard was added from 5mg/ml stock solution made up in Dichloromethane (DCM) to give a final concentration of 50ppm in 10ml. 10ml of DCM was added by pipette. The bottle were capped and swirled for 5 seconds, then placed into an ultrasonic bath (heated to 35°C) and sonicated for 5 mins. The bottles were removed and swirled gently. This was repeated every 5 mins until 15 mins had elapsed, after which time the bottles were removed from the heat source and allowed to cool completely. Once cool, 1ml was pipetted from each bottle into a labelled 1.5m GC vial and placed into the sample concentrator set at 36 °C until the DCM had evaporated. The samples were re-dissolved in 1ml of 49.5:49.5:1 acetonitrile: water: acetic acid, capped and vortexed for 1min. The sample was then taken up by glass pipette and transferred into a 2ml syringe and dispensed through a 13mm 0.45$\mu$m nylon syringe filter into a new 1.5 ml GC vial. Each vial was capped ready for analysis by LC. A stock solution of 5000ppm acetamiprid was prepared by dissolving 0.1g of the analytical standard in 20ml of DCM. Appropriate volumes were diluted with 10ml of DCM to give a series of standards from 5 to 100 $\mu$g/ml (5, 10, 15, 20, 50 & 100). For each type of seed the five standards which most closely encompass the active level were chosen for the calibration curve. An appropriate volume (200$\mu$l of 1000 $\mu$g/ml Stock Analytical Quality Control (AQC) in DCM) was added to blank seeds. This was done for 3 replicates. Each standard and AQC sample were treated as above. All samples and standards were analysed by Liquid Chromatograph.

**Chromatographic conditions**

| Column | Poroshell 120 SB-AQ 2.1x 50.0mm 2.7$\mu$m | |
|---|---|---|
| Detector | UV 254nm | |
| | Slit 4nm | |
| Inlet system | Autosampler | |
| | Draw speed 200$\mu$l | |
| | Eject speed 200$\mu$l | |
| | Low pressure set 5 bar | |
| | High pressure set 600bar | |
| Injection Volume | 3$\mu$l | |
| Column oven | 40°C | |
| Mobile phase | Flow 0.6ml/min | |
| | Time (mins) | %MeOH | % Water |
| | | + 0.5% $CH_3COOH$ | + 0.5% CH3COOH |
| | 0 | 5.0 | 95.0 |
| | 5.0 | 5.0 | 95.0 |
| | 5.2 | 95.0 | 5.0 |
| | 7.0 | 95.0 | 5.0 |
| | 7.2 | 5.0 | 95.0 |
| | 10.0 | 5.0 | 95.0 |
| Run time | 10 min. | |
| Approximate | Internal standard | 2.4 min. |
| Retention Times | Active components | 7.0min. |

**Calibration**

A graph of peak area ratio PAR ( peak area / peak area IS) (y axis) vs concentration (x axis) was constructed for the calibration standards. A linear trendline was used to find the line of best fit and display the coefficient of determination $r^2$ and the equation for the line y = mX + c. The data was accepted if the $r^2$ value was > 0.98.

**Samples**

$$\text{Acetamiprid concentration mg/extract} = \frac{(PAR - c) \times 10}{m \times 1000}$$

$$\text{Acetamiprid concentration mg/seed} = \frac{(PAR - c) \times 10}{m \times 1000} \quad \text{(divided by number seeds)}$$

$$\text{Acetamiprid concentration mg/g seed} = \frac{(PAR - c) \times 10}{m \times 1000} \times \frac{1000}{\text{sample wt (mg)}}$$

Where:

PAR =  peak area ratio
c =  constant
m =  slope
10 =  volume of extract

**Germination studies**

Formulation powders were weighed into 500 ml aluminium cans along with 100 g samples of seeds. The samples were homogenised for 30 s by gently agitating the cans to ensure a uniform coating. A total of 100 seeds were randomly selected from each sample for use in the germination test. Treatments were arranged in the growth chamber in a fully randomised design.

Batches of 50 seeds were germinated according to the conditions in Table 3. There were 3 treatments (loadings) for each of the 2 seed type. Treatment combinations were replicated 3 times to give a total of 18 germination results. Reduced germination (defined as the percentage reduction in the mean germination time of a treatment group compared to the control group) has been identified as a symptom of phytotoxicity in EPPO guideline PP 1/135 (4) 'Efficacy evaluation of plant protection products phytotoxicity assessment'.

**Table 3:** *Germination conditions, as defined by ISTA guidelines*

| Seed Type | Temp (°C) | RH (%) | Light ($\mu$mol m$^{-2}$ s$^{-1}$) | Substrate | Watering regime | Test Duration |
|---|---|---|---|---|---|---|
| Maize | 20 | 80 | 8/16hr 160 | Sand | Ad-lib | 7 days |
| Oilseed rape | 20 | 80 | 8/16hr 160 | Paper | Ad-lib | 10 days |

Ranal and Santana (2006) identified 6 measurements that quantify each individual aspect of the seed germination process, one of which includes the mean germination time. These 6 measurements were determined in this study: germinability ($G$), mean germination time (MT), coefficient of variation of the germination time ($CV_t$), mean germination rate (MR), uncertainty of the germination process ($U$) and synchronicity of germination ($Z$) (Ranal *et al.,* 2009, and Ranal and Santana, 2006). All 6 measurements were taken to determine the effects of the application rate of acetamiprid on germination. The mathematical formulae used for each measurement are found in Ranal, M.A., Santana, D.G. 2006 and Ranal, M.A., Santana, D.G., Ferreira, W.R., Mendes-Rodrigues, C. 2009.

The germination tests were conducted according to the International Rules for Seed Testing (International Seed Testing Association (ISTA), 2016), with a modification to the duration of the study. The length of the oilseed rape germination test was extended to 24 days, which is 14 days longer than the 10 days recommended by ISTA. The length of the maize germination test was extended to 13 days, which is 6 days longer that the 7 days recommended by the International Seed Testing Association (ISTA). The number of germinated seeds were counted daily until the final day of the test period. Seedlings were categorised as normal or abnormal and un-germinated seeds as defined in the International Rules for Seed Testing.

**Plant growth studies**

Delayed growth is listed is one of the symptoms of phytotoxicity listed EPPO guideline PP 1/135(4) 'Phytotoxicity assessment'. In this study delays or accelerations in reaching growth stage 12 in Maize were measured.

Maize seeds (seed details as per Table 1) were treated at the maize application rates described in Table 2 using the methodology described in the germination study. A total of 85 seeds were randomly selected from each sample and used in the study. Batches of 17 seeds were grown under the germination conditions described in Table 3, however, as seeds were grown in a growth chamber for a period of 20 days, seeds were planted in seedling compost and grown in module trays (individual cells 3.5 cm x 3.5 cm x 4.5 cm).

**Environmental Monitoring**

Average temperature and humidity were monitored in the growth chamber using calibrated lascar data loggers.

**Statistical Analysis**

All germination measurements were analysed using ANOVA with arcsine transformations carried out on germinability (*G*) and coefficient of variation measurements (Ranal *et al.,* 2009). Data was checked for normality following transformation and conformed as normal. In the plant growth study the mean number of days for plants to reach BBCH growth stage 12 was analysed using ANOVA. Data was tested for normality and confirmed as normal. Statistical analysis was conducted using XLSTAT Version 2014.1.01 software.

OBJECTIVE 3 TO CONFIRM THE SYSTEMIC ACTIVITY OF ACETAMIPRID FORMULATED IN ENTOSTAT®

**Test & Reference Item Details**

| | |
|---|---|
| Test item type: | Acetamiprid formulated with carnauba wax, for use as a systemic insecticidal seed treatment. |
| Test item contents: | Acetamiprid and carnauba wax were formulated at a ratio of 37:63. |
| Test item rate: | The formulation was applied to seed at high and low rates based on typical commercial application rates of neonicotinoids. |
| Reference item type: | Untreated naked seeds |
| Application interval: | Applied once to seed at the start of the experiment |

Naked maize seeds were used in this study. Seed variety, source, batch number and thousand grain weight (TGW) are detailed in Table 4.

**Table 4:** *Seed details*

| Seed Species | Variety | Source | Batch Number | TGW (grams) |
|---|---|---|---|---|
| Maize | Ambition | Limagrain | F0964T012312SM | 303 |

In this study there were 3 treatments (loadings) (Table 5). Treatment combinations were replicated once (2 sub-samples) for the residue analysis.

**Table 5:** *Application rates of seed treatment formulations in maize*

| Seed Species | Ratio of Acetamiprid in formulation | Acetamiprid application rate (mg per seed) | Acetamiprid application rate (g per kg seed) | Formulation application rate (% w/w) | Formulation application rate (kg per tonne) |
|---|---|---|---|---|---|
| Maize | 37:63 | 0.925 | 3.056 | 0.83 | 8.3 |
| Maize | 37:63 | 0.093 | 0.303 | 0.08 | 0.8 |

(continued)

| Seed Species | Ratio of Acetamiprid in formulation | Acetamiprid application rate (mg per seed) | Acetamiprid application rate (g per kg seed) | Formulation application rate (% w/w) | Formulation application rate (kg per tonne) |
|---|---|---|---|---|---|
| Maize | 0 | 0.000 | 0.00 | 0.00 | 0.0 |

Formulation treatments were weighed into 500 ml aluminium cans along with 100 g samples of seeds. The samples were homogenised for 30 s by gently agitating the cans to ensure a uniform coating. A total of 85 seeds were randomly selected from each sample and used in the study. Batches of 17 seeds were grown according to the conditions outlined in the International Rules for Seed Testing (ISTA, 2016), though the duration of the growth period was increased from 7 to 20 days. As seeds were grown for a period of 20 days, seeds were planted in seedling compost and grown in module trays (individual cells 3.5 cm x 3.5 cm x 4.5 cm). Growth conditions are detailed in Table 6. Treatments were arranged in the growth chamber in a fully randomised order.

**Table 6:** *Germination conditions, as defined by ISTA guidelines*

| Seed Species | Temp (°C) | RH (%) | Light ($\mu$mol m$^{-2}$ s$^{-1}$) | Substrate | Watering regime | Test Duration |
|---|---|---|---|---|---|---|
| Maize | 20 | 80 | 8/16hr 160 | John Innes No. 1 Compost | Ad-lib | 7 days |

The systemic activity of acetamiprid formulations after a period of 20 days was measured by harvesting the plants from each replicate by cutting the stem of each plant with a pair of scissors at the soil level. The plant material was bulked together and residue analysis was performed using Liquid Chromatography with a Mass Spectrometer Detector (ng/g plant material).

Determination of Acetamiprid in Maize Plant Tissue

A homogenised sample of Maize Plant Tissue was prepared by roughly chopping and macerating approximately 10g along with 50mls of Methanol with a blender. The sample extract was accurately transferred to a filter paper and collected into a large Turbovap® II vial. The solid filtrate was returned to the blender with an additional 50ml of Methanol. The sample extract was accurately transferred to the filter paper and combined into the large Turbovap® II vial with the first extract. The blender, filter paper and solid filtrate were washed with a further volume of 50mls of Methanol and combined into a large Turbovap® II vial. The sample extract was evaporated down to approximately 5mls using a Turbovap® II instrument. The Turbovap® II instrument was set up with a water bath at 50°C, at 15 bar pressure. The sample was then reconstituted, by passing through a 0.22$\mu$m PTFE syringe filter into a 10ml volumetric flask, and made to volume with Methanol ready for injection onto the LC-QToF.

LC-QTOF Conditions:

| | |
|---|---|
| Instrument: | Agilent 6500 Series Q-ToF Mass Spectrometer |
| Mode: | ESI Jet Spray Source |
| Ionisation: | Positive |
| MS Scan Range: | 50-1000m/z |
| Extracted Ions: | Quantitation by Molecular Formula extraction of $C_{10}H_{11}ClN_4$ which relates to 222.06723 mono isotopic weight |
| Extracted Ions: | 223.0745, 225.0717, 245.0564, 247.0537, 261.0304 and 263.0276 |
| Eluent: | 40% Acetonitrile, 60% water adjusted to pH3 with Formic Acid |
| Acquisition Rate: | 1 Spectra/Second |
| Acquisition Time: | 1000ms/Spectra |
| Retention Time: | Approximately 7.7-7.8 minutes |

(continued)

| Gas Temperature: | 350°C |
| Drying Gas Flow: | 8L/min |
| Nebulizer: | 60psig |
| Sheath Gas: | 250°C |
| Sheath Gas Flow: | 6L/min |
| VCap: | 3000V |
| Nozzle Voltage: | 2000V |
| Fragmentor: | 150V |
| Skimmer: | 65V |
| OCT 1 RF Vpp: | 750V |
| Collision Energy: | 0V |

Acetamiprid Reference Standard

The acetamiprid reference standard, CAS No. [135410-20-7] was supplied by Fluka with purity 99.9%. The working standards, used for the calibration of the LC-QTOF, were the primary standard and those produced by serial dilution of this standard.

Acetamiprid Primary Standard

A primary standard of reference grade acetamiprid was prepared at a concentration of 1000mg/L (1.0mg/mL) in Acetonitrile.

Acetamiprid Working Standard

The working standards are created by dilution of the primary standard (5.1.1) in Acetonitrile. The concentrations of the respective standards are shown below:

a) 100 mg/L
b) 50 mg/L
c) 20 mg/L
d) 10 mg/L
e) 5.0 mg/L
f) 1.0 mg/L
g) 0.5 mg/L
h) 0.1 mg/L
i) 0.03mg/L

**OBJECTIVE 4 CONFIRM THAT THE ENTOSTAT FORMULATED SEED TREATMENT DELIVERS SUFFICIENT SYSTEMIC ACTIVITY TO CONTROL FOLIAR PESTS (APHIDS)**

| Test item type: | Acetamiprid formulated with carnauba wax, for use as an insecticidal seed treatment. |
| Test item contents: | Acetamiprid and carnauba wax were formulated at a rate of 1:1. |
| Test item rate: | Formulations were applied to seeds at rates based on typical commercial application rates of neonicotinoids |
| Application interval: | Applied once to seed at the start of the experiment |

Treatments were applied to naked maize seeds. Variety, source, batch number, and thousand grain weight (TGW) are detailed in Table 7.

**Table 7:** *Seed details*

| Variety | Source | Batch Number | TGW (grams) |
|---------|--------|--------------|-------------|
| Ambition | Limagrain | F0964T012312SM | 264 |

The highest application rates of active ingredient is based on the highest commercial application rates of Gaucho (imidacloprid) and Poncho (clothianidin) on maize (Table 8). Other application rates were quarter logarithmic dilutions of the highest application rate. Untreated seeds were included as negative controls.

**Table 8:** *Application rates of seed treatment formulations in maize at each time point*

| Ratio of Acetamiprid in formulation | Acetamiprid application rate (mg per seed)[1] | Acetamiprid application rate (g per kg seed) | Formulation application rate (% w/w) | Formulation application rate (kg per tonne) |
|---|---|---|---|---|
| 1:1 | 1.25 | 4.13 | 0.83 | 8.3 |
| 1:1 | 0.70 | 2.32 | 0.47 | 4.7 |
| 1:1 | 0.40 | 1.31 | 0.29 | 2.6 |
| 1:1 | 0.22 | 0.73 | 0.15 | 1.5 |
| 1:1 | 0.13 | 0.41 | 0.08 | 0.8 |
| 1:1 | 0.00 | 0.00 | 0.00 | 0.0 |
| [1] Expressed as loading of A.I. per seed | | | | |

Treatments were weighed into 500 ml aluminium cans along with 100 g samples of seeds. Samples were homogenised for 30 s by gently agitating the cans by hand to ensure a uniform coating. A total of 20 seeds were randomly selected from each sample and used in the study. Seeds were grown in 7x7x8cm pots filled with seedling compost (2 seeds per pot: 1 pot = 1 replicate). Plants were maintained in growth tents (maintained at 25°C, 80% RH, 10L/14D) until required for aphid introductions. All experimental pots were fully randomised within their respective tents. Plants were watered as required with tap water.

Two insect rearing cages, each containing three pots of 10 maize var. Ambition seedlings, were used to maintain a culture of *Rhopalosiphum padi.* Insect rearing cages were kept in a growth tent (24°C, 85% RH, 16L/8D). Plants were watered as required with tap water. Aphids used in experiments were undifferentiated nymphs. At each time point, 14 and 21 days after treatment, nymphs were taken from one of the insect rearing cages for use in the experiment.

**Experimental Procedures**

Aphids were introduced to experimental plants 14 and 21 days after sowing. 20 nymphs were introduced to each of the experimental pots using a fine paint brush. Onto each of the 2 plants in the experimental pots, 10 aphids were placed onto the adaxial surface of the leaf and enclosed in a clip cage. Treatments were replicated 10 times. Pots were placed in a growth chamber (20°C, 80% RH and 16L/8D hr 160 $\mu$mol m$^{-2}$ s$^{-1}$) for 48 hours, at which time aphid mortality was assessed.

**Validation of loading rates**

Liquid chromatography analysis was performed on seed samples to determine the concentration of acetamiprid in each sample, as per the methods outlined in a previous section.

**Environmental Monitoring**

Average temperature and humidity were monitored in the growth tent and growth chamber using calibrated lascar data loggers.

**Statistical Analysis**

Mortality data was analysed using a generalized linear model. Statistical analysis was carried out using R 3.0.2 Statistical Analysis Software.

## RESULTS

## OBJECTIVE 1a FORMULATION OF ELECTROSTATIC WAXES WITH A NEONICOTINOID INSECTICIDE

The efficiency of the micronization was 89.67% (Table 9). For the micronized sample, the particle-size distribution (PSD) of a powder has been carried out. 0.35 % of particles have a diameter under 0.30 $\mu$m and all particles have a diameter under 112.0 $\mu$m.

**Table 9** shows the operating parameters applied for the particles formulations.

| | $m_{sample}$/g | Mass ratio | $p$/MPa | $p_{over}$/MPa | $T$/°C | $d_{nozzle}$/mm | $t_{mixing}$/h | *Yield/%* |
|---|---|---|---|---|---|---|---|---|
| **Carnauba wax (50 wt. %) + Acetamiprid (50 wt. %)** | 30 | 1:1 | 16 | 17 | 103 | 0.4 | 2 | **89.67** |

Other values according to the PSD:

- Median Diameter: 55.67 $\mu$m,
- Diameter at 10.0 %: 37.50 $\mu$m,
- Diameter at 90.0 %: 82.47 $\mu$m,
- Cumul. at 100.00 $\mu$m: 98.44 %.

To obtain the smaller particles, it would be reasonable to change the operating parameters such as:

- $p$ or/and $T$,
- different nozzle diameters,
- different compositions of the sample.

**Validation of loading levels of acetamiprid in Entostat powder® - carnauba variant**

Loading levels of acetamiprid in the carnauba wax powder after one of the PGSS runs, as determined by HPLC analysis, are given in Table 10.

**Table 10:** Loading levels of acetamiprid in the Entostat® powder

| Rep. | Area AI | Area IS | PAR = y | Sample wt (mg) | Inj conc ug/ml =x | mg/ extract | mg/g | Nominal | % of nominal /recovery | Final Result (mg/g) |
|---|---|---|---|---|---|---|---|---|---|---|
| a | 390.98 | 371.98 | 1.05 | 9.3 | 66.32 | 3.32 | 356.57 | 500.00 | 71.31 | 370.11 |
| b | 427.88 | 342.1 | 1.25 | 10.1 | 78.10 | 3.90 | 386.62 | 500.00 | 77.32 | |
| c | 422.82 | 342.70 | 1.23 | 10.5 | 77.10 | 3.85 | 367.14 | 500.00 | 73.42 | |

## OBJECTIVE 1b FORMULATION OF ELECTROSTATIC WAXES WITH A STROBILURIN FUNGICIDE

For the micronized sample, the particle-size distribution (PSD) of a powder was carried out 10 % of particles had a diameter under 8.77 $\mu$m, 50 % of particles had a diameter under 30.58 $\mu$m, 90 % of particles had a diameter under 56.51 $\mu$m and all particles have a diameter under 140.0 $\mu$m.

**Validation of loading levels of Azoxystrobin in Entostat® powder - polyethylene variant**

Loading levels of Azoxystrobin in the polyethylene wax powder after one of the PGSS runs, as determined by GC analysis, are given in Table 11.

**Table 11:** Loading levels of Azoxystrobin in the Entostat® powder

| Rep. | Area AI | Area is | PAR = y | Sample wt (mg) | Inj conc ug/ml =x | mg/extract | mg/g | Nominal | % of nominal /recovery | Final Result (mg/g) |
|---|---|---|---|---|---|---|---|---|---|---|
| a | 15363.83 | 5653.81 | 2.72 | 19.3 | 18.25 | 9.12 | 472.67 | 500.00 | 94.53 | **465.88** |
| b | 15372.07 | 5680.61 | 2.71 | 19.6 | 18.17 | 9.09 | 463.53 | 500.00 | 92.71 | |
| c | 14971.30 | 5529.38 | 2.71 | 19.7 | 18.18 | 9.09 | 461.43 | 500.00 | 92.29 | |

## RESULTS

**OBJECTIVE 2 CONFIRM ENTOSTAT® FORMULATED ACETAMIPRID HAS NO ADVERSE EFFECT ON SEED GERMINATION OR PLANT GROWTH**

Loading levels of acetamiprid on seeds ranged from 31-82% on maize and from 28-100% on oilseed rape (Table 12). Higher relative achieved loading levels (as a percentage) were observed in the seeds treated with the lower application rates.

**Table 12:** *Predicted and actual acetamiprid application rates*

| Seed Type | Theoretical Acetamiprid application rate (mg per seed)[1] | Actual Acetamiprid application rate (mg per seed) | Percentage of Theoretical Application Rate achieved |
|---|---|---|---|
| Maize | 0.925 | 0.286 | 31% |
| Maize | 0.093 | 0.076 | 82% |
| OSR | 0.032 | 0.009 | 28% |
| OSR | 0.003 | 0.003 | 100% |
| [1] Expressed as loading of A.I. per seed | | | |

Acetamiprid, formulated in carnauba wax powder, did not adversely germination of maize seeds, as measured by germinability ($G$), mean germination time ($MT$), mean germination rate ($MR$), uncertainty of the germination process ($U$) and synchronicity of germination ($Z$) (Figures 2, 3, 5, 6 and 7). The only parameter which was affected by the seed treatment was Coefficient of variation of the germination time ($CV_t$), were the values obtained in the low acetamiprid loading (target 0.093 mg per seed) were significantly higher than in the untreated seeds (Figure 4). As well as having little effect on germination in maize, the formulations has no adverse effect on plant growth, as measured in the time taken to plants reach growth stage 12 (Figure 14).

Application of Entostat® (carnauba variant) formulated with acetamiprid did not adversely affect any of the measures of germination in oilseed rape (Figures 8-13).

**I Germinability (*G*) of Maize**

Reference is made to Figure 2 (see also legend, above).

**II Mean Germination Time** (MT) **of Maize**

Reference is made to Figure 3 (see also legend, above).

**III Coefficient of variation of the germination time** ($CV_t$) **of maize seeds**

Reference is made to Figure 4 (see also legend, above).

**IV Mean Germination Rate** (MR) **of Maize Seeds**

Reference is made to Figure 5 (see also legend, above).

**V Uncertainty of the Germination Process** (*U*) **for Maize Seeds**

Reference is made to Figure 6 (see also legend, above).

**VI Synchronicity of Germination** (*Z*) **of Maize Seeds**

Reference is made to Figure 7 (see also legend, above).

**VII Germinability (*G*) of Oilseed rape seeds**

Reference is made to Figure 8 (see also legend, above).

**VIII Mean Germination Time (MT) of Oilseed Rape seeds**

Reference is made to Figure 9 (see also legend, above).

**IX Coefficient of variation of the germination time (*CV$_t$*) of oilseed rape seeds**

Reference is made to Figure 10 (see also legend, above).

**X Mean Germination Rate (MR) of Oilseed Rape Seeds**

Reference is made to Figure 11 (see also legend, above).

**XI Uncertainty of the Germination Process (*U*) for Oilseed Rape Seeds**

Reference is made to Figure 12 (see also legend, above).

**XII Synchronicity of Germination (*Z*) of Oilseed Rape Seeds**

Reference is made to Figure 13 (see also legend, above).

**XIII Time to reach Growth Stage 12 for maize seeds treated with acetamiprid formulations**

**Reference is made to Figure 14 (see also legend, above).**

**XIV Insect mortality as a measure of the systemic activity of acetamiprid**

Reference is made to Figure 15 (see also legend, above).

**Environmental Monitoring:**

Temperatures in the growth chamber remained within $\pm 2^0C$ of the prescribed temperature for the duration of the test period.

**RESULTS**

OBJECTIVE 3 TO CONFIRM THE SYSTEMIC ACTIVITY OF ACETAMIPRID FORMULATED IN ENTOSTAT®

Analysis of the levels of acetamiprid on the seed after application indicated a much higher percentage of loading in the seeds treated with lower formulation application rates (Table 13). At the lower formulation application rate 77% of the target application rate was recovered from the treated seeds. At the higher formulation application rate 53% of the target application rate was recovered from the treated seeds.

**Table 13:** *Predicted and Actual acetamiprid application rates on seed*

| Seed Type | Theoretical Acetamiprid application rate (mg per seed)[1] | Actual Acetamiprid application rate (mg per seed) | Percentage of Theoretical Application Rate achieved |
|---|---|---|---|
| Maize | 0.925 | 0.486 | 53% |
| Maize | 0.093 | 0.072 | 77% |
| [1] Expressed as loading of A.I. per seed | | | |

**Acetamiprid content in maize plant tissue**

Acetamiprid applied to seeds was recovered from plant tissue, thus demonstrating the systemic movement of the chemistry through the plant when applied using Entostat® (carnauba variant) as a formulation tool. The average quantity of acetamiprid recovered from the plant tissue ranged from 0.375mg/Kg in the lower loading level to 2.663mg/Kg in the higher loading level. The complete set of results are below in Table 14.

**Table 14:** Acetamiprid Content in Maize Plant Tissue

| Description | Retention Time (mins) | Unit Area | Response Factor | Conc. (mg/L) | Weight Taken (g) | Conc. in Plant material (mg/Kg) |
|---|---|---|---|---|---|---|
| Acetamiprid 10mg/L | 7.79 | 8347984 | 1.206E-06 | | | |
| Untreated Control | ND | ND | | <0.1 | 10.0075 | <0.1 |
| Untreated Control | ND | ND | | <0.1 | 9.9927 | <0.1 |
| Acetamiprid 10mg/L | 7.79 | 8236436 | 1.2796E-06 | | Mean | <0.1 |
| Maize Low | 7.74 | 421222.6 | | 0.539 | 10.3982 | 0.518 |
| Maize Low | 7.74 | 178997.0 | | 0.229 | 9.8462 | 0.232 |
| Acetamiprid 10mg/L | 7.78 | 7393650 | 1.4613E-06 | | Mean | 0.375 |
| Maize High | 7.79 | 1847658 | | 2.700 | 10.0076 | 2.695 |
| Maize High | 7.79 | 1805800 | | 2.639 | 10.0189 | 2.631 |
| Acetamiprid 10mg/L | 7.78 | 6292554 | 1.5013E-06 | | Mean | 2.663 |

Where:

Response Factor = 10/ Mean bracket standard area
Concentration (mg/L) = Response Factor x Unit Area
Concentration in Sample (mg/Kg) = (mg/L) x 1 x (10/ sample weight) x (standard purity/ 100)
Standard Purity= 99.9%

**Environmental Monitoring:**

Temperatures in the growth chamber remained within $\pm 2^0$C of the prescribed temperature for the duration of the test period.

**RESULTS**

OBJECTIVE 4 CONFIRM THAT THE ENTOSTAT® **FORMULATED SEED TREATMENT DELIVERS SUFFICIENT SYSTEMIC ACTIVITY TO CONTROL FOLIAR PESTS (APHIDS)**

**Validation of loading rates**

The percentage of the target application rate that was actually delivered to the maize seeds ranged from 34-69% (Table 15). As in the earlier studies, the percentage of the target application rate that was achieved decreased as the application rate increased

**Table 15:** *Predicted and actual acetamiprid application rates*

| Theoretical Acetamiprid application rate (mg/seed)[1] | Actual Acetamiprid application rate (mg/seed) | Percentage of Target Application Rate (%) |
|---|---|---|
| 1.25 | 0.43 | 34 |
| 0.70 | 0.40 | 57 |
| 0.40 | 0.25 | 63 |
| 0.22 | 0.14 | 64 |
| 0.13 | 0.09 | 69 |
| [1] Expressed as loading of A.I. per seed | | |

**Insect mortality as a measure of the systemic activity of acetamiprid**

For both 14 and 21 days treatments, when analysed using a quasibinomial generalized linear model, a significantly ($p < 0.001$) greater proportion of nymphs survived on untreated maize 48 hours after introduction than in each acetamiprid treatment (Figure 15). For all treatments, there was also a non-significant ($p > 0.05$) increase in nymph survival between 14 and 21 DAT (Figure 15).

Of the *R. padi* nymphs not surviving on treated or untreated maize, only a small proportion were found to be dead on the maize leaves (Table 16); the majority of nymphs were found on the clip cage and not on the plant (Table 16).

**Table 16:** The proportion of *R. padi* nymphs alive on maize, dead on maize and not on maize 48 hours after introduction onto plants at 14 and 21 DAT.

| Acetamiprid (mg/seed)[1] | DAT | Proportion of aphids alive on maize | Proportion of aphids dead on maize | Proportion of aphids not on maize |
|---|---|---|---|---|
| 0.00 | 14 | 0.61 | 0.05 | 0.34 |
| 0.09 | 14 | 0.00 | 0.13 | 0.87 |
| 0.14 | 14 | 0.01 | 0.10 | 0.89 |
| 0.25 | 14 | 0.00 | 0.24 | 0.76 |
| 0.40 | 14 | 0.02 | 0.10 | 0.87 |
| 0.43 | 14 | 0.01 | 0.09 | 0.91 |
| 0.00 | 21 | 0.65 | 0.09 | 0.26 |
| 0.09 | 21 | 0.16 | 0.04 | 0.80 |
| 0.14 | 21 | 0.14 | 0.07 | 0.79 |
| 0.25 | 21 | 0.05 | 0.04 | 0.91 |
| 0.40 | 21 | 0.06 | 0.04 | 0.89 |
| 0.43 | 21 | 0.03 | 0.09 | 0.87 |
| [1] Actual loading of A.I. per seed | | | | |

For all treatments, there was also a non-significant ($p > 0.05$) increase in nymph survival between 14 and 21 DAT; so although there is a reduction in acetamiprid efficacy between 14 and 21 DAT, a high level of plant protection is still being provided.

**Environmental Monitoring:**

Temperatures in the growth chamber remained within $\pm 2^0$C of the prescribed temperature for the duration of the test period.

## DISCUSSION

The primary objective of this study was to determine when Entostat® could be used as a delivery system for the application of a systemic pesticide applied to seeds. We demonstrated that the Particles from Gas Saturated Solutions (PGSS™) technique could be successfully used to formulate composite materials containing high loadings of pesticides. When delivered to seed, the pesticide (insecticide example), achieved mean loading rates in the powder of 74-97% of acetamiprid in a 1:1 Entostat® formulation. In the acetamiprid formulation the median diameter of the powder was 55.67 $\mu$m, with 98.44 % of the formulation having a diameter of 100.00 $\mu$m or less. In the azoxystrobin formulation the median diameter of the powder was 30.58 $\mu$m, with 90 % of the formulation having a diameter of 56.51 $\mu$m or less. Where the formulation powder was applied to seeds, higher relative quantities of chemistry were recovered from the seeds treated at the lower formulation rates, suggesting that this Entostat® formulation (powder) adheres better to the seed at lower volumes, i.e. overloading the seed may lead to loss of some of the formulation.

The second objective of this study was to determine the phytotoxicity of acetamiprid formulated with Entostat® to maize and oilseed rape when applied as seed treatments. High application rates were based on the highest commercial application rates of neonicotinoids in oilseed rape and maize. Low application rates were a logarithmic dilution of the high application rate. Reduced germination was identified as a symptom of phytotoxicity so the effect of acetamiprid treatments on six aspects of the germination process were measured (germination time, coefficient of variation of the germination time, germination rate, uncertainty of the germination process and synchronicity of germination). For maize, the Entostat® acetampiprid formulations did not affect any of these criteria, with the exception of the Coefficient of variation of the germination time ($CV_t$) which was higher for maize seeds treated with the low rate of acetamiprid compared to the untreated seeds. For oilseed rape, germinability results were lower than the EC minimum germination standard (85%) for the untreated seeds and seeds treated with the low level of acetamiprid, but there was no difference between the acetamiprid and untreated seeds in any of the six germination measures. The third objective of this study was to confirm that Entostat® formulated acetamiprid applied to seeds can be moved through the plant (systemic) and recovered from leaf tissue following plant germination. Our results confirmed that systemic activity is achieved, and that higher levels of the chemistry in plant tissue occur at the higher levels of loading onto the seed.

The final aim of this study was to determine whether acetamiprid exhibits insecticidal activity when delivered via the Entostat® formulation. Forty eight hours after aphid introduction, a significantly ($p < 0.001$) greater proportion of nymphs survived on untreated maize than on plants raised from seeds which had been treated with the Entostat® acetamiprid formulations. Of the *R. padi* nymphs not surviving on treated or untreated maize, only a small proportion was found to be dead on the maize leaves; the majority of nymphs were found off the plant. These results indicate that, although acetamiprid can cause *R. padi* mortality if a treated plant is fed upon, the main effect of acetamiprid is as an antifeedant (i.e. *R. padi* avoids feeding on acetamiprid treated plants). The exact behaviour of the nymphs - whether an attempt at feeding occurred before avoidance or they avoided the plants from the start - is unknown. Antifeedant behaviour towards the neonicotinoid imidacloprid in aphids has been demonstrated in *Aphis gossypii* and *Diaphorina citri* (*Aphis gossypii* also shows antifeedant behaviour to thiametoxam) (Boina et al 2009; Gerami and Heidari 2014). Acetamiprid acting as an antifeedant is, if anything, a more desirable quality in an insecticide. If the insect is avoiding the plant, it not only prevents damage, but reduces the risk of viruses and pathogens being transmitted to the plant. This is particularly important for *R. padi* as within a cereal crop it can potentially cause a 40-60% loss in yield, and also acts as the main vector of *barley yellow dwarf virus* (BYDV) that can cause a further 85% loss in yield (Leather *et al 1989;* Taheri *et al* 2010).

## REFERENCES

Bartlett, D. W., Clough, J. M., Godfrey, C. R. A., Godwin,J. R., Hall, A. A., Heaney, S. P., and Maund, S. J. (2001). Understanding the Strobilurin fungicides. Pesticide Outlook. 143-148.

Bertelsen, J.R., de Neergaard, E., and Smedegaard-Petersen, V. (2001). Fungicidal effects of azoxystrobin and epoxiconazole on phyllosphere fungi, senescence and yield of winter wheat. Plant Pathology. 50: 190-205.

Boina, D. R., Onagbola, E. O., Salyanib, M. and Stelinskia, L. L. (2009). Antifeedant and sublethal effects of imidacloprid on Asian citrus psyllid, Diaphorina citri. Pest Manag Sci. 65: 870-877.

COMMISSION IMPLEMENTING REGULATION (EU) No 485/2013 amending Implementing Regulation (EU) No 540/2011, as regards the conditions of approval of the active substances clothianidin, thiamethoxam and imidacloprid, and prohibiting the use and sale of seeds treated with plant protection products containing those active substances. Official Journal of the European Union

Elbert, A., Haas, M., Springer, B. Thielert, W., Nauen, R. 2008. Applied aspects of neonicotinoid uses in crop protection. Pest Management Science. 64. 1099-1105. EPPO PP 1/135 (4) Phytotoxicity assessment, Efficacy evaluation of plant protection products. Bulletin OEPP/EPPO Bulletin (2014) 44 (3), 265-273

Fernández-ortuño, D., Torés, J. A., De Vicente, A., and Pérez-garcía, A. (2010). The Qol Fungicides, the Rise and Fall of a Successful Class of Agricultural Fungicides. Fungicides. Odile Carisse (Ed.). ([Online] http://www.intechopen.com/books/fungicides/the-qoifungicides-the-rise-and-fall-of-a-successful-class-of-agricultural-fungicides (Accessed: 29/07/2016)).

FRAC. (2016). Mode of action of fungicides. ([Online] http://www.frac.info/(Accessed: 29/07/2016)).

Gerami, S., and Heidari, A. (2014). Energy Metabolism Pattern in Cotton Aphid, Aphis gossypii Glover (Hem.: Aphididae) Exposure to Neonicotinoids. Journal of Agricultural Science and Technology A. 4: 736-742.

Gerami, S., and Heidari, A. (2014). Energy Metabolism Pattern in Cotton Aphid, Aphis gossypii Glover (Hem.: Aphididae) Exposure to Neonicotinoids. Journal of Agricultural Science and Technology A. 4: 736-742.

International Rules for Seed Testing, Volume 2016, Number 1, 1 January 2016 Knez, Z., Skerget, M., Knez Hrnčič, M., Čuček, D., Chapter 2 - Particle Formation Using Sub- and Supercritical Fluids, Supercritical Fluid Technology for Energy and Environmental Applications, 2014, str. 31-67.

Knez Ž., Weidner E. Particle formation and particle design using supercritical fluids, Current Opinion in Solid State and Materials Science, 2003, 7, 4-5, str. 353-361. Leather, S. R., Walter, K. F. A., & Dixon, A. F. G. (1989). Factors determining the pest status of the bird cherry oat aphid, Rhopalosiphum padi (L). (Hemiptera; Aphididae), in Europe: a study and review. Bull. Ent. Res. 79: 345-360.

Liu, Z., Dai, Y., Huang, G., Gu, Y., Ni, J., Wei, H., Yuan, S. 2011. Soil microbial degradation of neonicotinoid insecticides imidacloprid, acetamiprid, thiacloprid and imidaclothiz and its effect on the persistence of bioefficacy against horsebean aphid Aphis craccivora Koch after soil application. Pest Management Science. 67. 1245-1252.

Ranal, M.A., Santana, D.G. 2006. How and why to measure the germination process? Revista Brasil. Bot. 29. 1-11.

Ranal, M.A., Santana, D.G., Ferreira, W.R., Mendes-Rodrigues, C. 2009. Calculating germination measurements and organizing spreadsheets. Revista Brasil. Bot. 32. 849-855.

Sudisha, J., Amruthesh, K. N., Deepak, S. A., Shetty, N. P., Sarosh, B. R., and Shekar Shetty, H. (2005). Comparative efficacy of strobilurin fungicides against downy mildew disease of pearl millet. Pesticide Biochemistry and Physiology. 81: 188-197.

Taheri, S., Razmjou, J., & Rastegari, N. 2010. Fecundity and Development Rate of the Bird Cherry-oat Aphid, Rhopalosiphum padi (L) (Hom.: Aphididae) on Six Wheat Cultivars. Plant Protect. Sci. 46 (2): 72 - 78

**Claims**

1. A method of treating a seed with a systemic pesticide comprising contacting the seed with electrostatic carrier particles of median diameter up to 120 $\mu$m and comprising at least one of natural waxes, synthetic waxes and mineral waxes having a melting point of ≥40°C and incorporating the systemic pesticide such that the pesticide is within and on the surface of the carrier particle wherein the weight of electrostatic carrier particles containing systemic pesticide per seed is from 0.0001 mg to 4mg, and wherein the particles contain ≥10% pesticide by weight whereby the systemic pesticide is taken up by the seed.

2. A method according to claim 1, wherein the electrostatic carrier particles are present on the seed in the form of a dry powder.

3. A method according to any one of claims 1 - 2, wherein the weight of the electrostatic particles containing systemic pesticide per seed is from 0.0001mg to 2mg, preferably from 0.0001mg to 1.5mg, and most preferably from 0.003mg to 1.5mg.

4. A method according to any preceding claim, wherein the systemic pesticide is selected from a systemic insecticide, a systemic acaricide and a systemic fungicide or a mixture of two or more thereof.

5. A method according to any preceding claim, wherein the systemic insecticide is selected from organophosphates, carbamates, neonicotinoids, ryanoids, and plant derived insecticides and the systemic fungicide is selected from benzimidazoles, imidazoles, phenylamides, phosphonates, pyrimidines, triazoles, and strobilurins.

6. A method according to any preceding claim, wherein the systemic pesticide is (E)-N1-[(6-chloro-3-pyridyl) methyl]-N2-cyano-N1-methylacetamidine (acetamiprid).

7. A method according to any preceding claim, wherein the particles contain ≥20% pesticide by weight, preferably ≥30% pesticide by weight, or more preferably ≥40% pesticide by weight.

8.  A method according to any preceding claim, wherein the particles contain up to 50% pesticide by weight.

9.  Use of electrostatic carrier particles of median diameter up to 120μm comprising

    at least one of natural waxes, synthetic waxes and mineral waxes having a melting point of ≥40°C, and
    at least one systemic pesticide
    in coating seeds,
    wherein the said pesticide is combined within and on the surface of the electrostatic carrier particles,
    wherein the weight of electrostatic particles including systemic pesticide per seed is from 0.0001mg to 4mg, and
    wherein the particles contain ≥10% pesticide by weight,
    whereby the systemic pesticide is taken up by the seed.

10. Use according to claim 9, wherein the electrostatic carrier particles are present on the seed in the form of a dry powder.

11. Use according to any one of claims 9 to 10, wherein the systemic pesticide is selected from a systemic insecticide, a systemic acaricide and a systemic fungicide or a mixture of two or more thereof.

12. Use according to any one of claims 9 to 11, wherein the systemic pesticide is selected from organophosphates, carbamates, neonicotinoids, ryanoids, and plant derived insecticides and the systemic fungicide is selected from benzimidazoles, imidazoles, phenylamides, phosphonates, pyrimidines, triazoles and strobilurins.

13. Use according to any one of claims 9 to 12, wherein the systemic pesticide is (E)-N1-[(6-chloro-3-pyridyl) methyl]-*N*2-cyano-*N*1-methylacetamidine (acetamiprid), or azoxystrobin.

14. A seed-containing composition comprising i) at least one systemic pesticide in contact with the seed; and ii) electrostatic carrier particles of median diameter up to 120μm and made from at least one of natural waxes, synthetic waxes and mineral waxes having a melting point of ≥40°C, wherein the said pesticide is combined within and on the surface of the electrostatic carrier particles, **characterised in that** the weight of electrostatic particles containing systemic pesticide per seed is from 0.0001mg to 4mg, and wherein the particles contain ≥10% pesticide by weight for use in transferring the systemic pesticide into the seed.

15. The composition for use according to claim 14, wherein the electrostatic carrier particles are present on the seed in the form of a dry powder.

16. The composition for use according to any one of claim 14 - 15, wherein the systemic pesticide is selected from a systemic insecticide, a systemic acaricide and a systemic fungicide or a mixture of two or more thereof.

17. The composition for use according to any one of claim 14 - 16, wherein the systemic insecticide is selected from organophosphates, carbamates, neonicotinoids, ryanoids, and plant derived insecticides and the systemic fungicide is selected from benzimidazoles, imidazoles, phenylamides, phosphonates, pyrimidines, triazoles, and strobilurins.

18. The composition for use according to any one of claim 14 - 17, wherein the systemic pesticide is (*E*)-*N*1-[(6-chloro-3-pyridyl) methyl]-*N*2-cyano-*N*1-methylacetamidine (acetamiprid) or azoxystrobin.

19. A method of producing seed for use according to any one of claims 14 - 18 comprising

    i) mixing wax with at least one systemic pesticide in a ratio of 50:50 to 99:1 wt. %;
    ii) placing the mixture of step i) in an autoclave and adding liquid $CO_2$ under pressure;
    iii) mixing the components of step ii) in liquid form under constant high temperature and constant pressure for a time period sufficient to complete mixing of all the components;
    iv) expanding the gas saturated product solution of step iii) through an aperture under high pressure into a spray receptacle;
    v) cooling the product of step iv) to below the solidification temperature of the wax forming fine particles; and
    vi) adding the fine particles of v) to seeds to form a composition according to any of claims 14-18
    vii) wherein systemic pesticide is transferred to the seed.

**Patentansprüche**

1. Verfahren zum Behandeln eines Samens mit einem systemischen Pestizid, umfassend ein Inkontaktbringen des Samens mit elektrostatischen Trägerteilchen eines mittleren Durchmessers von bis zu 120 μm und umfassend mindestens eines von natürlichen Wachsen, synthetischen Wachsen und Mineralwachsen, die einen Schmelzpunkt von ≥40 °C aufweisen, und Integrieren des systemischen Pestizids, sodass das Pestizid innerhalb und auf der Oberfläche des Trägerteilchens ist, wobei das Gewicht der elektrostatischen Trägerteilchen, die systemisches Pestizid enthalten, pro Samen 0,0001 mg bis 4 mg ist, und wobei die Teilchen ≥10 % Pestizid nach Gewicht enthalten wodurch das systemische Pestizid von dem Samen aufgenommen wird.

2. Verfahren nach Anspruch 1, wobei die elektrostatischen Trägerteilchen in Form eines trockenen Pulvers auf dem Samen vorhanden sind.

3. Verfahren nach einem der Ansprüche 1 bis 2, wobei das Gewicht der elektrostatischen Teilchen, die systemisches Pestizid enthalten, pro Samen 0,0001 mg bis 2 mg, vorzugsweise 0,0001 mg bis 1,5 mg und am meisten bevorzugt 0,003 mg bis 1,5 mg ist.

4. Verfahren nach einem vorherigen Anspruch, wobei das systemische Pestizid ausgewählt ist aus einem systemischen Insektizid, einem systemischen Akarizid und einem systemischen Fungizid oder einem Gemisch aus zwei oder mehreren davon.

5. Verfahren nach einem vorherigen Anspruch, wobei das systemische Insektizid ausgewählt ist aus Organophosphaten, Carbamaten, Neonicotinoiden, Ryanoiden und von Pflanzen abgeleiteten Insektiziden und das systemische Fungizid ausgewählt ist aus Benzimidazolen, Imidazolen, Phenylamiden, Phosphonaten, Pyrimidinen, Triazolen und Strobilurinen.

6. Verfahren nach einem vorherigen Anspruch, wobei das systemische Pestizid (*E*)-*N*1-[(6-Chlor-3-pyridyl)methyl]-*N*2-cyano-*N*1-methylacetamidin(Acetamiprid) ist.

7. Verfahren nach einem vorherigen Anspruch, wobei die Teilchen ≥20 Gewichtsprozent Pestizid, vorzugsweise ≥30 Gewichtsprozent Pestizid, oder bevorzugter ≥40 Gewichtsprozent Pestizid, enthalten.

8. Verfahren nach einem vorherigen Anspruch, wobei die Teilchen bis zu 50 Gewichtsprozent Pestizid enthalten.

9. Verwendung von elektrostatischen Trägerteilchen eines mittleren Durchmessers von bis zu 120 μm, umfassend

mindestens eines von natürlichen Wachsen, synthetischen Wachsen und Mineralwachsen, die einen Schmelzpunkt von ≥40 °C aufweisen, und mindestens ein systemisches Pestizid
beim Beschichten von Samen,
wobei das Pestizid in und auf der Oberfläche der elektrostatischen Trägerteilchen kombiniert ist,
wobei das Gewicht der elektrostatischen Teilchen, die systemisches Pestizid beinhalten, pro Samen 0,0001 mg bis 4 mg ist, und
wobei die Teilchen ≥10 Gewichtsprozent Pestizid enthalten, wodurch das systemische Pestizid von dem Samen aufgenommen wird.

10. Verwendung nach Anspruch 9, wobei die elektrostatischen Trägerteilchen auf dem Samen in Form eines trockenen Pulvers vorhanden sind.

11. Verwendung nach einem der Ansprüche 9 bis 10, wobei das systemische Pestizid ausgewählt ist aus einem systemischen Insektizid, einem systemischen Akarizid und einem systemischen Fungizid oder einem Gemisch aus zwei oder mehreren davon.

12. Verwendung nach einem der Ansprüche 9 bis 11, wobei das systemische Insektizid ausgewählt ist aus Organophosphaten, Carbamaten, Neonicotinoiden, Ryanoiden und von Pflanzen abgeleiteten Insektiziden und das systemische Fungizid ausgewählt ist aus Benzimidazolen, Imidazolen, Phenylamiden, Phosphonaten, Pyrimidinen, Triazolen und Strobilurinen.

13. Verwendung nach einem der Ansprüche 9 bis 12, wobei das systemische Pestizid (E)-*N*1-[(6-Chlor-3-pyridyl)methyl]-*N*2-cyano-*N*1-methylacetamidin (Acetamiprid) oder Azoxystrobin ist.

14. Samen enthaltende Zusammensetzung, umfassend i) mindestens ein systemisches Pestizid in Kontakt mit dem Samen; und ii) elektrostatische Trägerteilchen eines mittleren Durchmessers von bis zu 120 $\mu$m und gefertigt aus mindestens einem von natürlichen Wachsen, synthetischen Wachsen und Mineralwachsen, die einen Schmelzpunkt von ≥40 °C aufweisen, wobei das Pestizid in und auf der Oberfläche der elektrostatischen Trägerteilchen kombiniert ist, **dadurch gekennzeichnet, dass** das Gewicht der elektrostatischen Teilchen, die systemisches Pestizid enthalten, pro Samen 0,0001 mg bis 4 mg ist, und wobei die Teilchen ≥10 Gewichtsprozent Pestizid enthalten, zur Verwendung beim Übertragen des systemischen Pestizids in den Samen.

15. Zusammensetzung zur Verwendung nach Anspruch 14, wobei die elektrostatischen Trägerteilchen auf dem Samen in Form eines trockenen Pulvers vorhanden sind.

16. Zusammensetzung zur Verwendung nach einem der Ansprüche 14 bis 15, wobei das systemische Pestizid ausgewählt ist aus einem systemischen Insektizid, einem systemischen Akarizid und einem systemischen Fungizid oder einem Gemisch aus zwei oder mehreren davon.

17. Zusammensetzung zur Verwendung nach einem der Ansprüche 14 bis 16, wobei das systemische Insektizid ausgewählt ist aus Organophosphaten, Carbamaten, Neonicotinoiden, Ryanoiden und von Pflanzen abgeleiteten Insektiziden und das systemische Fungizid ausgewählt ist aus Benzimidazolen, Imidazolen, Phenylamiden, Phosphonaten, Pyrimidinen, Triazolen und Strobilurinen.

18. Zusammensetzung zur Verwendung nach einem der Ansprüche 14 bis 17, wobei das systemische Pestizid (E)-*N*1-[(6-Chlor-3-pyridyl)methyl]-*N*2-cyano-*N*1-methylacetamidin (Acetamiprid) oder Azoxystrobin ist.

19. Verfahren zum Herstellen von Samen zur Verwendung nach einem der Ansprüche 14 bis 18, umfassend

> i) Mischen von Wachs mit mindestens einem systemischen Pestizid in einem Verhältnis von 50:50 bis 99:1 Gewichtsprozent;
> ii) Einbringen des Gemischs aus Schritt i) in einen Autoklaven und Hinzufügen von flüssigem $CO_2$ unter Druck;
> iii) Mischen der Komponenten aus Schritt ii) in flüssiger Form unter konstanter hoher Temperatur und konstantem Druck über einen Zeitraum, der ausreichend ist, um ein Mischen aller Komponenten zu vervollständigen;
> iv) Expandieren der gasgesättigten Produktlösung aus Schritt iii) durch eine Öffnung unter hohem Druck in ein Sprühgefäß;
> v) Abkühlen des Produkts aus Schritt iv) auf unter die Erstarrungstemperatur des Wachses, womit feine Teilchen gebildet werden; und
> vi) Hinzufügen der feinen Teilchen aus v) zu Samen, um eine Zusammensetzung nach einem der Ansprüche 14 bis 18 zu bilden,
> vii) wobei das systemische Pestizid auf den Samen übertragen wird.

## Revendications

1. Procédé de traitement d'une graine avec un pesticide systémique comprenant la mise en contact de la graine avec des particules porteuses électrostatiques de diamètre médian jusqu'à 120 $\mu$m et comprenant au moins une parmi des cires naturelles, cires synthétiques et des cires minérales ayant un point de fusion ≥40 °C et l'incorporation du pesticide systémique de façon à ce que le pesticide se trouve à l'intérieur et à la surface de la particule porteuse, dans lequel le poids par graine de particules porteuses électrostatiques contenant le pesticide systémique est de 0,0001 mg à 4 mg, et dans lequel les particules contiennent ≥10 % en poids de pesticide ce qui permet au pesticide systémique d'être capturé par la graine.

2. Procédé selon la revendication 1, dans lequel les particules porteuses électrostatiques sont présentes sur la graine sous la forme d'une poudre sèche.

3. Procédé selon l'une quelconque des revendications 1 - 2, dans lequel le poids par graine de particules électrostatiques contenant un pesticide systémique est de 0,0001 mg à 2 mg, de préférence de 0,0001 mg à 1,5 mg, et le plus préférablement de 0,003 mg à 1,5 mg.

4. Procédé selon une quelconque revendication précédente, dans lequel le pesticide systémique est choisi parmi un insecticide systémique, un acaricide systémique et un fongicide systémique ou un mélange de deux ou plusieurs d'entre eux.

5. Procédé selon une quelconque revendication précédente, dans lequel l'insecticide systémique est choisi parmi les organophosphates, carbamates, néonicotinoïdes, ryanoïdes et les insecticides d'origine végétale, et le fongicide systémique est choisi parmi les benzimidazoles, imidazoles, phénylamides, phosphonates, pyrimidines, triazoles et strobilurines.

6. Procédé selon une quelconque revendication précédente, dans lequel le pesticide systémique est le (E)-*N*1-[(6-chloro-3-pyridyl)méthyl]-*N*2-cyano-*N*1-méthylacétamidine (acétamipride).

7. Procédé selon une quelconque revendication précédente, dans lequel les particules contiennent ≥20 % en poids de pesticide, de préférence ≥30 % en poids de pesticide, ou de préférence ≥40 % en poids de pesticide.

8. Procédé selon une quelconque revendication précédente, dans lequel les particules contiennent jusqu'à 50 % en poids de pesticide.

9. Utilisation de particules porteuses électrostatiques de diamètre médian allant jusqu'à 120 μm comprenant

au moins une parmi les cires naturelles, cires synthétiques et cires minérales ayant un point de fusion de ≥40 °C et au moins un pesticide systémique
dans l'enrobage des graines,
ledit pesticide étant combiné à l'intérieur et à la surface des particules porteuses électrostatiques,
le poids des particules électrostatiques, y compris le pesticide systémique, par graine étant de 0,0001 mg à 4 mg, et
les particules contenant ≥10 % en poids de pesticide,
ce qui permet au pesticide systémique d'être capturé par la graine.

10. Utilisation selon la revendication 9, dans laquelle les particules porteuses électrostatiques sont présentes sur la graine sous la forme d'une poudre sèche.

11. Utilisation selon l'une quelconque des revendications 9 à 10, dans laquelle le pesticide systémique est choisi parmi un insecticide systémique, un acaricide systémique et un fongicide systémique ou un mélange de deux ou plusieurs de ceux-ci.

12. Utilisation selon l'une quelconque des revendications 9 à 11, dans laquelle l'insecticide systémique est choisi parmi les organophosphates, carbamates, néonicotinoïdes, ryanoïdes et les insecticides d'origine végétale et le fongicide systémique est choisi parmi les benzimidazoles, imidazoles, phénylamides, phosphonates, pyrimidines, triazoles et strobilurines.

13. Utilisation selon l'une quelconque des revendications 9 à 12, dans laquelle le pesticide systémique est le (E)-*N*1-[(6-chloro-3-pyridyl)méthyl]-*N*2-cyano-*N*1 -méthylacétamidine (acétamipride), ou l'azoxystrobine.

14. Composition contenant des graines comprenant i) au moins un pesticide systémique en contact avec la graine ; et ii) des particules porteuses électrostatiques de diamètre médian jusqu'à 120 μm et fabriquées à partir d'au moins une parmi les cires naturelles, cires synthétiques et cires minérales ayant un point de fusion ≥40 °C, dans laquelle ledit pesticide est combiné à l'intérieur et à la surface des particules porteuses électrostatiques, **caractérisée en ce que** le poids par graine des particules électrostatiques contenant un pesticide systémique est de 0,0001 mg à 4 mg, et dans lequel les particules contiennent ≥10 % en poids de pesticide pour l'utilisation dans le transfert du pesticide systémique dans la graine.

15. Composition à utiliser selon la revendication 14, dans laquelle les particules porteuses électrostatiques sont présentes sur la graine sous la forme d'une poudre sèche.

16. Composition à utiliser selon l'une quelconque des revendications 14-15, dans laquelle le pesticide systémique est choisi parmi un insecticide systémique, un acaricide systémique et un fongicide systémique ou un mélange de deux ou plusieurs de ceux-ci.

**17.** Composition à utiliser selon l'une quelconque des revendications 14-16, dans laquelle l'insecticide systémique est choisi parmi les organophosphates, carbamates, néonicotinoïdes, ryanoïdes et les insecticides d'origine végétale et le fongicide systémique est choisi parmi les benzimidazoles, imidazoles, phénylamides, phosphonates, pyrimidines, triazoles et strobilurines.

**18.** Composition à utiliser selon l'une quelconque des revendications 14-17, dans laquelle le pesticide systémique est le (E)-$N$1-[(6-chloro-3-pyridyl)méthyl]-$N$2-cyano-$N$1-méthylacétamidine (acétamipride) ou l'azoxystrobine.

**19.** Procédé de production de graines à utiliser selon l'une quelconque des revendications 14-18 comprenant

i) le mélange de la cire avec au moins un pesticide systémique dans une proportion de 50:50 à 99:1 % en poids ;
ii) l'introduction du mélange de l'étape i) dans un autoclave et l'ajout de $CO_2$ liquide sous pression ;
iii) le mélange des composants de l'étape ii) sous forme liquide à haute température constante et à pression constante pendant une période de temps suffisante pour permettre le mélange de tous les composants ;
iv) l'expansion de la solution de produit saturée de gaz de l'étape iii) à travers une ouverture sous haute pression dans un réceptacle de pulvérisation ;
v) le refroidissement du produit de l'étape iv) en dessous de la température de solidification de la cire formant des particules fines ; et
vi) l'ajout des particules fines de v) aux graines pour former une composition selon l'une quelconque des revendications 14-18
vii) ce qui permet le transfert du pesticide systémique à la graine.

**Figure 1a**

**FIGURE 1b**

# FIGURE 2

# FIGURE 3

**FIGURE 4**

**FIGURE 5**

FIGURE 6

FIGURE 7

**FIGURE 8**

**FIGURE 9**

**FIGURE 10**

**FIGURE 11**

# FIGURE 12

# FIGURE 13

**FIGURE 14**

**FIGURE 15**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 2481881 A
- US 2015150250 A

- US 2014057786 A

### Non-patent literature cited in the description

- *CHEMICAL ABSTRACTS,* 135410-20-7
- **BARTLETT, D. W. ; CLOUGH, J. M. ; GODFREY, C. R. A. ; GODWIN, J. R. ; HALL, A. A. ; HEANEY, S. P. ; MAUND, S. J.** Understanding the Strobilurin fungicides. *Pesticide Outlook,* 2001, 143-148
- **BERTELSEN, J.R. ; DE NEERGAARD, E. ; SMEDEGAARD-PETERSEN, V.** Fungicidal effects of azoxystrobin and epoxiconazole on phyllosphere fungi, senescence and yield of winter wheat. *Plant Pathology.,* 2001, vol. 50, 190-205
- **BOINA, D. R. ; ONAGBOLA, E. O. ; SALYANIB, M. ; STELINSKIA, L. L.** Antifeedant and sublethal effects of imidacloprid on Asian citrus psyllid. *Diaphorina citri. Pest Manag Sci.,* 2009, vol. 65, 870-877
- **ELBERT, A. ; HAAS, M. ; SPRINGER, B. ; THIELERT, W. ; NAUEN, R.** Applied aspects of neonicotinoid uses in crop protection. *Pest Management Science,* 2008, vol. 64, 1099-1105
- Efficacy evaluation of plant protection products. *Bulletin OEPP/EPPO Bulletin,* 2014, vol. 44 (3), 265-273
- The QoI Fungicides, the Rise and Fall of a Successful Class of Agricultural Fungicides. **FERNÁNDEZ-ORTUÑO, D. ; TORÉS, J. A. ; DE VICENTE, A. ; PÉREZ-GARCÍA, A.** Fungicides. 2010
- *Mode of action of fungicides,* 29 July 2016, http://www.frac.info
- **GERAMI, S. ; HEIDARI, A.** Energy Metabolism Pattern in Cotton Aphid, Aphis gossypii Glover (Hem.: Aphididae) Exposure to Neonicotinoids. *Journal of Agricultural Science and Technology A.,* 2014, vol. 4, 736-742
- **LEATHER, S. R. ; WALTER, K. F. A. ; DIXON, A. F. G.** Factors determining the pest status of the bird cherry oat aphid, Rhopalosiphum padi (L). (Hemiptera; Aphididae), in Europe: a study and review. *Bull. Ent. Res.,* 1989, vol. 79, 345-360
- **LIU, Z. ; DAI, Y. ; HUANG, G. ; GU, Y. ; NI, J. ; WEI, H. ; YUAN, S.** Soil microbial degradation of neonicotinoid insecticides imidacloprid, acetamiprid, thiacloprid and imidaclothiz and its effect on the persistence of bioefficacy against horsebean aphid Aphis craccivora Koch after soil application. *Pest Management Science,* 2011, vol. 67, 1245-1252
- **RANAL, M.A. ; SANTANA, D.G.** How and why to measure the germination process?. *Revista Brasil. Bot.,* 2006, vol. 29, 1-11
- **RANAL, M.A. ; SANTANA, D.G. ; FERREIRA, W.R. ; MENDES-RODRIGUES, C.** Calculating germination measurements and organizing spreadsheets. *Revista Brasil. Bot.,* 2009, vol. 32, 849-855
- **SUDISHA, J. ; AMRUTHESH, K. N. ; DEEPAK, S. A. ; SHETTY, N. P. ; SAROSH, B. R. ; SHEKAR SHETTY, H.** Comparative efficacy of strobilurin fungicides against downy mildew disease of pearl millet. *Pesticide Biochemistry and Physiology.,* 2005, vol. 81, 188-197
- **TAHERI, S. ; RAZMJOU, J. ; RASTEGARI, N.** Fecundity and Development Rate of the Bird Cherry-oat Aphid, Rhopalosiphum padi (L) (Hom.: Aphididae) on Six Wheat Cultivars. *Plant Protect. Sci.,* 2010, vol. 46 (2), 72-78